(19) Europäisches Patentamt
European Patent Office
Office européen des brevets

(11) EP 4 653 849 A1

(12) EUROPEAN PATENT APPLICATION
published in accordance with Art. 153(4) EPC

(43) Date of publication:
26.11.2025 Bulletin 2025/48

(21) Application number: 23924262.1

(22) Date of filing: 26.12.2023

(51) International Patent Classification (IPC):
**G01N 21/64** (2006.01) **G06T 7/90** (2017.01)

(52) Cooperative Patent Classification (CPC):
G01N 21/64; G06T 7/90

(86) International application number:
PCT/JP2023/046787

(87) International publication number:
WO 2024/176618 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.02.2023 JP 2023027521

(71) Applicant: Hamamatsu Photonics K.K.
Hamamatsu-shi, Shizuoka 435-8558 (JP)

(72) Inventors:
• HIGUCHI, Takafumi
Hamamatsu-shi, Shizuoka 435-8558 (JP)
• IKEMURA, Kenichiro
Hamamatsu-shi, Shizuoka 435-8558 (JP)
• KAMO, Wataru
Hamamatsu-shi, Shizuoka 435-8558 (JP)
• KATO, Natsumi
Hamamatsu-shi, Shizuoka 435-8558 (JP)

(74) Representative: Hoffmann Eitle
Patent- und Rechtsanwälte PartmbB
Arabellastraße 30
81925 München (DE)

(54) **FLUORESCENT IMAGE ACQUISITION METHOD, FLUORESCENT IMAGE ACQUISITION DEVICE, AND FLUORESCENT IMAGE ACQUISITION PROGRAM**

(57) A fluorescent image acquisition system 1 includes an irradiation device 2 which irradiates a sample with each of excitation lights of a plurality of wavelength distributions; an image acquisition device 3 which acquires, with respect to each of a plurality of fluorescences corresponding to each of the plurality of excitation lights, a first fluorescent image in a first optical state and a second fluorescent image in a second optical state in which fluorescence is measured at a wavelength characteristic different from that in the first optical state through a fluorescence filter unit having a plurality of reflection wavelength ranges and a plurality of transmission wavelength ranges; and an image processing device 4 which processes a plurality of the first fluorescent images and a plurality of the second fluorescent images, in which the image processing device 4 calculates, for the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights, and discriminates whether the pixel is a single-color pixel based on the intensity ratio for each of the plurality of excitation lights.

**Fig.1**

## Description

### Technical Field

One aspect of an embodiment relates to a fluorescent image acquisition method, a fluorescent image acquisition device, and a fluorescent image acquisition program.

### Background Art

Conventionally, a multiple staining method of simultaneously staining a plurality of substances in a sample for a sample such as a biological tissue has been used. Then, in order to observe the substances in the sample subjected to the multiple staining, a fluorescent image is also acquired by irradiating the sample with excitation light. For example, Non Patent Literature 1 below discloses application of a nonnegative matrix factorization (NMF) method in order to obtain a separated image for each substance in the sample by performing blind unmixing of fluorescent images obtained by observing fluorescences in a plurality of wavelength ranges. In addition, Non Patent Literature 2 below discloses, as a method of unmixing fluorescent images, clustering fluorescent images, extracting a maximum value of fluorescence intensity in each clustered pixel group, and generating a separated image based on the maximum value.

### Citation List

### Non Patent Literature

Non Patent Literature 1: Binjie Qin et al., "Target/Background Classification Regularized Nonnegative Matrix Factorization for Fluorescence Unmixing", IEEE TRANSACTIONS ON INSTRUMENTATION AND MEASUREMENT, VOL. 65, NO. 4, APRIL 2016
Non Patent Literature 2: Tristan D. McRae et al., "Robust blind spectral unmixing for fluorescence microscopy using unsupervised learning", PLOS ONE, December 2, 2019

### Summary of Invention

### Technical Problem

By the way, in the conventional technology, it tends to be difficult to discriminate a single-color pixel in a fluorescent image when observing the fluorescent image. Therefore, in order to efficiently observe the fluorescent image, it is desired to discriminate the single-color pixel in the fluorescent image.

Therefore, one aspect of the embodiment has been made in view of such a problem, and an object thereof is to provide a fluorescent image acquisition method, a fluorescent image acquisition device, and a fluorescent image acquisition program capable of discriminating a single-color pixel in a fluorescent pixel.

### Solution to Problem

A fluorescent image acquisition method according to a first aspect of the embodiment includes: an irradiation step of irradiating a sample with each of excitation lights of a plurality of wavelength distributions; an acquisition step of acquiring, with respect to each of a plurality of fluorescences corresponding to each of the plurality of excitation lights, a first fluorescent image in a first optical state and a second fluorescent image in a second optical state in which fluorescence is measured at a wavelength characteristic different from that in the first optical state through a fluorescence filter unit having a plurality of reflection wavelength ranges and a plurality of transmission wavelength ranges; a calculation step of calculating, for the first fluorescent image and the second fluorescent image, an intensity ratio that is a ratio between an intensity value of a pixel of the first fluorescent image and an intensity value of a pixel of the second fluorescent image corresponding to the pixel, and calculating the intensity ratio for each of the plurality of excitation lights; and a discrimination step of discriminating whether the pixel is a single-color pixel based on the intensity ratio for each of the plurality of excitation lights.

Alternatively, a fluorescent image acquisition device according to a second aspect of the embodiment includes: an irradiation device which irradiates a sample with each of excitation lights of a plurality of wavelength distributions; an image acquisition device which acquires, with respect to each of a plurality of fluorescences corresponding to each of the plurality of excitation lights, a first fluorescent image in a first optical state and a second fluorescent image in a second optical state in which fluorescence is measured at a wavelength characteristic different from that in the first optical state through a fluorescence filter unit having a plurality of reflection wavelength ranges and a plurality of transmission wavelength ranges; and an image processing device which processes a plurality of the first fluorescent images and a plurality of the second fluorescent images, in which the image processing device calculates, for the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights, and discriminates whether the pixel is a single-color pixel based on the intensity ratio for each of the plurality of excitation lights.

Alternatively, a fluorescent image acquisition program according to a third aspect of the embodiment is a fluorescent image acquisition program for discriminating whether a pixel is a single-color pixel, by irradiating a sample with each of excitation lights of a plurality of wavelength distributions, with respect to each of a plurality of fluorescences corresponding to each of the plurality of excitation lights, based on a first fluorescent image in a first optical state and a second fluorescent image in a second optical state in which fluorescence is measured at a wavelength characteristic different from that in the first optical state, acquired through a fluorescence filter unit having a plurality of reflection wavelength ranges and a plurality of transmission wavelength ranges, the fluorescent image acquisition program for causing a computer to function as: an intensity ratio calculation unit which calculates, with respect to the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights; and a single-color pixel discrimination unit which discriminates whether the pixel is a single-color pixel based on the intensity ratio for each of the plurality of excitation lights.

According to the first aspect, the second aspect, or the third aspect, with respect to each of the plurality of fluorescences corresponding to each of the plurality of excitation lights, the first fluorescent image in the first optical state and the second fluorescent image in the second optical state in which fluorescence is measured at a wavelength characteristic different from that in the first optical state are acquired. Furthermore, the intensity ratio that is a ratio between the intensity value of the pixel of the first fluorescent image and the intensity value of the pixel of the second fluorescent image is calculated, and the intensity ratio for each of the plurality of excitation lights is calculated. In addition, whether the pixel is a single-color pixel is discriminated based on the intensity ratio for each of the plurality of excitation lights. As a result, even in a fluorescent image including a pixel in which fluorescences from a plurality of dyes are reflected in a mixed manner and a single-color pixel in which single-color fluorescence from a single dye is reflected, a single-color pixel can be discriminated from a plurality of pixels of the fluorescent image. That is, it is possible to discriminate a single-color pixel in a fluorescent image.

**Advantageous Effects of Invention**

According to one aspect of the present disclosure, it is possible to discriminate a single-color pixel in a fluorescent image.

**Brief Description of Drawings**

FIG. 1 is a schematic configuration diagram of a fluorescent image acquisition system 1 according to a first embodiment.
FIG. 2 is a perspective diagram illustrating a configuration of the fluorescent image acquisition system 1 in FIG. 1.
FIG. 3 is a block diagram illustrating an example of a hardware configuration of an image processing device 4 in FIG. 1.
FIG. 4 is a block diagram illustrating a functional configuration of the image processing device 4 in FIG. 1.
FIG. 5 is a diagram for explaining fluorescence intensities of a first fluorescent image and a second fluorescent image.
FIG. 6 is a diagram for explaining characteristics of an intensity ratio in a first pixel with respect to first excitation light and an intensity ratio in a first pixel with respect to second excitation light.
FIG. 7 is a diagram schematically illustrating characteristics of intensity ratios.
FIG. 8 is a diagram illustrating an image of pixel groups clustered by a clustering unit 204.
FIG. 9 illustrates an image of matrix data Y' regenerated by a statistical value calculation unit 205 and dye matrix data X' corresponding thereto.
FIG. 10 is a flowchart illustrating a procedure of a fluorescent image acquisition method according to the first embodiment.
FIG. 11 is a schematic configuration diagram of a fluorescent image acquisition system 1A according to a second embodiment.
FIG. 12 is a diagram for explaining an intensity ratio of each pixel in a case where a color camera is used.

FIG. 13 is a diagram for explaining an intensity ratio of each pixel in a case where a hyperspectral camera is used.

FIG. 14 is a schematic configuration diagram of a fluorescent image acquisition system 1B according to a third embodiment.

FIG. 15 is a schematic configuration diagram of a fluorescent image acquisition system 1C according to a fourth embodiment.

FIG. 16 is a diagram illustrating a result of clustering in a generation example of a fluorescent image.

FIG. 17 is a diagram illustrating a result of generating a fluorescent image from each dye in the generation example of the fluorescent image.

**Description of Embodiments**

Hereinafter, embodiments of the present disclosure will be described in detail with reference to the drawings. Note that in the description, the same reference numerals will be used for the same elements or elements having the same functions, and redundant description will be omitted.

[First Embodiment]

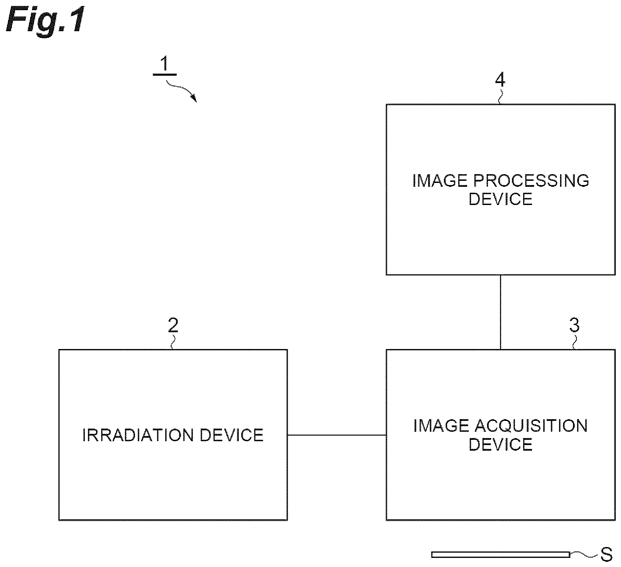

FIG. 1 is a schematic configuration diagram of a fluorescent image acquisition system 1 that is a fluorescent image acquisition device according to a first embodiment. The fluorescent image acquisition system 1 is a device for generating a fluorescent image for specifying a distribution of dyes in a sample such as a biological tissue to be observed. The image generated by the fluorescent image acquisition system 1 is used for the purpose of drug development, therapy study, and the like through analysis of the image. The fluorescent image acquisition system 1 includes an irradiation device 2 that is configured to irradiate a sample S with excitation light, an image acquisition device 3 that irradiates the sample S with excitation light and acquires an image of fluorescence generated in response to the irradiation, and an image processing device 4 that performs data processing on the image acquired by the image acquisition device 3. The image acquisition device 3 and the image processing device 4 may be configured to be able to transmit and receive image data by using wired communication or wireless communication therebetween, or may be configured to be able to input and output image data via a recording medium.

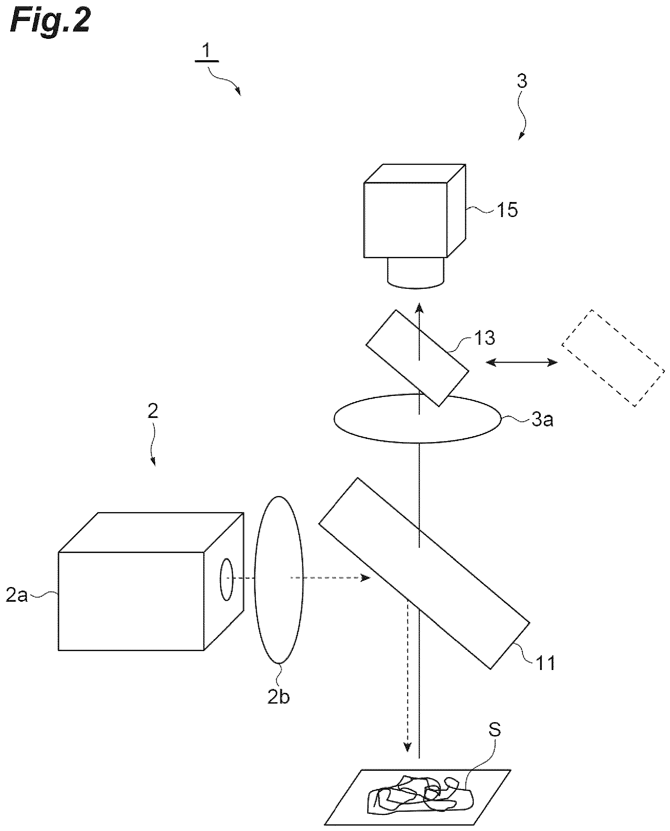

FIG. 2 is a perspective diagram illustrating a configuration of the fluorescent image acquisition system 1 of FIG. 1. In FIG. 2, an optical path of excitation light is indicated by a dotted line with an arrow, and an optical path of fluorescence is indicated by a solid line with an arrow. The irradiation device 2 includes an excitation light source 2a and an excitation light filter unit 2b. The image acquisition device 3 includes a dichroic mirror 11, a fluorescence filter unit 3a, a first optical filter 13, and a first camera 15.

The excitation light source 2a is a light source capable of emitting excitation lights of a plurality of wavelength bands (wavelength distributions) by switching, and is, for example, a light emitting diode (LED) light source, a light source consisting of a plurality of monochromatic laser light sources, or a light source combining a white light source and a wavelength selection optical element. The excitation light filter unit 2b is a multiband pass filter provided on the optical path of excitation light of the excitation light source 2a and having a property of transmitting lights of a plurality of predetermined wavelength ranges. The transmission wavelength band of the excitation light filter unit 2b is set according to a plurality of wavelength bands of excitation light that can be used. The dichroic mirror 11 is an optical member that is provided between the excitation light filter unit 2b and the sample S and has a property of reflecting the excitation light toward the sample S and transmitting fluorescence emitted from the sample S in response to the reflection. In the first embodiment, the irradiation device 2 emits excitation lights of M (M is an integer of 2 or more) wavelength bands. Hereinafter, each of the excitation light of the M wavelength bands is referred to as first excitation light, second excitation light,..., and M-th excitation light.

The fluorescence filter unit 3a is a multiband pass filter that is provided on the optical path of the fluorescence transmitted by the dichroic mirror 11 and has a property of transmitting lights of a plurality of predetermined wavelength ranges. The fluorescence filter unit 3a has a plurality of reflection wavelength ranges and a plurality of transmission wavelength ranges. The reflection wavelength ranges and the transmission wavelength ranges are alternately arranged. The reflection wavelength range is, for example, a wavelength range between the transmission wavelength ranges. The transmission wavelength range of the fluorescence filter unit 3a is set according to the wavelength band of fluorescence generated in a dye that can be included in the sample S to be observed.

The first optical filter 13 is an optical system that is provided on the optical path of fluorescence transmitted by the fluorescence filter unit 3a for acquiring wavelength information of the fluorescence. The first optical filter 13 includes a switching mechanism (not illustrated) that can switch a position of the first optical filter 13 so as to slide between a position on the optical path of the fluorescence from the fluorescence filter unit 3a and a position deviated from the optical path. In the first embodiment, a state in which wavelength information of fluorescence can be acquired through the first optical filter 13 by providing the first optical filter 13 on the optical path of the fluorescence is referred to as a first optical state, and a state in which wavelength information of fluorescence can be acquired without passing through the first optical filter 13 by not providing the first optical filter 13 on the optical path of the fluorescence is referred to as a second optical state. The image acquisition device 3 can measure fluorescence in the first optical state, and in the second optical state in which fluorescence is measured at a wavelength characteristic different from that in the first optical state.

The first optical filter 13 is a filter having transmittance different in each reflection wavelength range or each transmission wavelength range of the fluorescence filter unit 3a. In the first embodiment, the first optical filter 13 is an inclined filter having a wavelength characteristic of transmittance in which the transmittance linearly increases as the wavelength increases. That is, the transmittance of the first optical filter 13 monotonously increases over each transmission wavelength range of the fluorescence filter unit 3a. In the following description of the first embodiment, the first optical filter 13 that is such an inclined filter is also referred to as a first inclined filter 13. The first optical filter 13 may be an inclined filter having a wavelength characteristic of transmittance in which the transmittance linearly decreases as the wavelength increases. The first optical filter 13 may be an inclined filter of which transmittance monotonously changes over each reflection wavelength range of the fluorescence filter unit 3a.

The first camera 15 is an imaging device that images a two-dimensional image including N (N is an integer of 2 or more, for example, 2048 × 2048) pixels, and is a camera that images fluorescence transmitted through the first inclined filter 13 to acquire a first fluorescent image when the first inclined filter 13 is provided on the optical path of the fluorescence. That is, the first fluorescent image is a fluorescent image acquired in the first optical state. In addition, when the first inclined filter 13 is removed from the optical path of the fluorescence, the first camera 15 images the fluorescence to acquire a second fluorescent image. That is, the second fluorescent image is a fluorescent image acquired in the second optical state. The first camera 15 outputs the acquired first fluorescent image and second fluorescent image to the image processing device 4 by using communication or via a recording medium. In the first embodiment, it is assumed that each of the N pixels is a first pixel, a second pixel,..., and an N-th pixel.

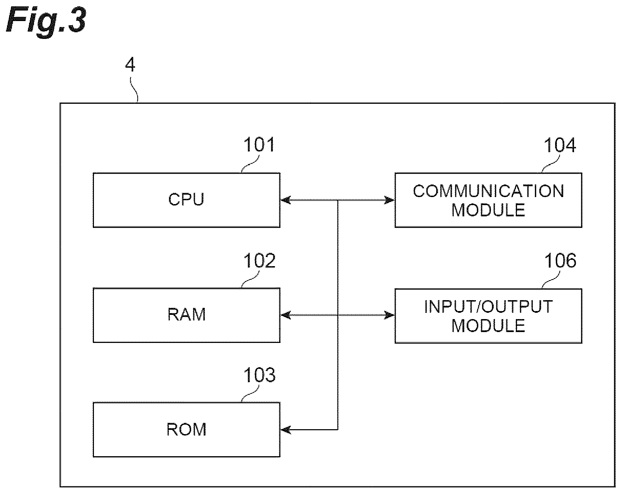

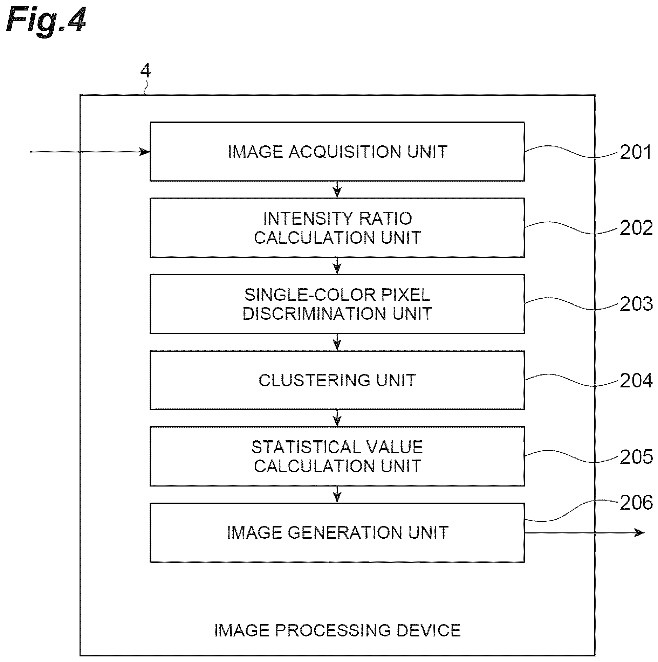

Next, a configuration of the image processing device 4 will be described with reference to FIGS. 3 and 4. FIG. 3 is a block diagram illustrating an example of a hardware configuration of the image processing device 4, and FIG. 4 is a block diagram illustrating a functional configuration of the image processing device 4.

As illustrated in FIG. 3, the image processing device 4 is physically a computer or the like including a central processing unit (CPU) 101 that is a processor, a random access memory (RAM) 102 or a read only memory (ROM) 103 that is a recording medium, a communication module 104, an input/output module 106, and the like, which are electrically connected to each other. Note that the image processing device 4 may include, as input/output devices, a display, a keyboard, a mouse, a touch panel display, or the like, or may include a data recording device such as a hard disk drive or a semiconductor memory. Furthermore, the image processing device 4 may include a plurality of computers.

As illustrated in FIG. 4, the image processing device 4 includes an image acquisition unit 201, an intensity ratio calculation unit 202, a single-color pixel discrimination unit 203, a clustering unit 204, a statistical value calculation unit 205, and an image generation unit 206 as functional components. Each functional unit of the image processing device 4 illustrated in FIG. 4 is realized by operating the communication module 104, the input/output module 106, and the like and reading and writing data in the RAM 102 under the control of the CPU 101 by reading a program (fluorescent image acquisition program according to the embodiment) on hardware such as the CPU 101 and the RAM 102. The CPU 101 of the image processing device 4 executes the computer program to cause each functional unit in FIG. 4 to function, and sequentially executes processing corresponding to a fluorescent image acquisition method to be described later. Note that the CPU 101 may be a single piece of hardware or may be implemented in programmable logic such as an FPGA like a software processor. The RAM or the ROM may be a single piece of hardware or may be built in a programmable logic such as an FPGA. Various types of data necessary for execution of the computer program and various types of data generated by execution of the computer program are all stored in an internal memory such as the ROM 103 and the RAM 102 or a storage medium such as a hard disk drive. Hereinafter, functions of functional components of the image processing device 4 will be described in detail.

The image acquisition unit 201 acquires the first fluorescent image and the second fluorescent image for each of the first to M-th excitation lights from the image acquisition device 3. The first fluorescent image is a fluorescent image acquired in the first optical state for a plurality of fluorescences corresponding to each of the first to M-th excitation lights emitted from the irradiation device 2. The second fluorescent image is a fluorescent image acquired in the second optical state for a plurality of fluorescences corresponding to each of the first to M-th excitation lights emitted from the irradiation device 2.

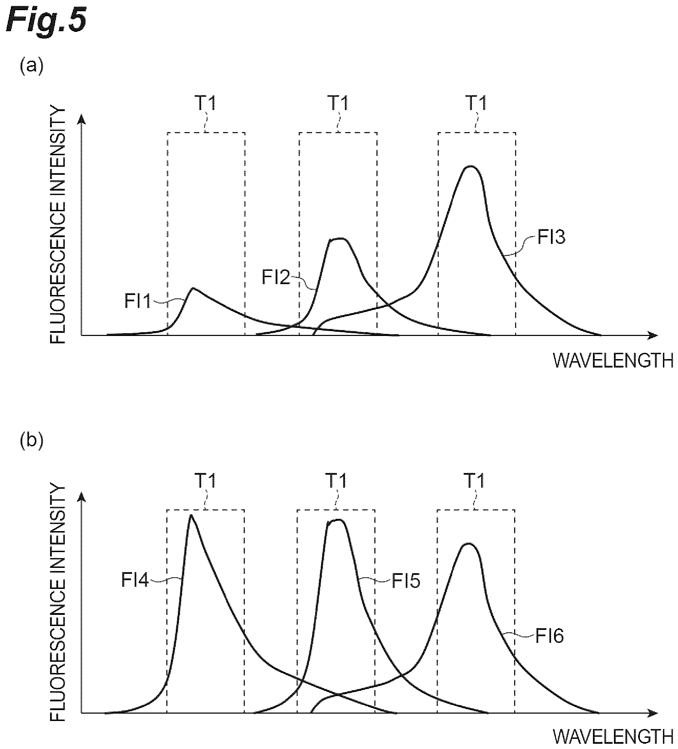

An example of fluorescence intensities of the first fluorescent image and the second fluorescent image will be described with reference to FIG. 5. In FIG. 5, part (a) illustrates wavelength characteristics of fluorescence intensities of the first fluorescent image acquired in the first optical state, and part (b) illustrates wavelength characteristics of fluorescence intensities of the second fluorescent image acquired in the second optical state. Here, it is assumed that first fluorescence, second fluorescence, and third fluorescence, which are three types of fluorescences, are imaged. In part (a) of FIG. 5, each of FI1, FI2, and FI3 indicates the fluorescence intensity of each of the first fluorescence, the second fluorescence, and the third fluorescence that have transmitted through the first inclined filter 13. In part (b) of FIG. 5, each of FI4, FI5, and FI6 indicates the fluorescence intensity of each of the first fluorescence, the second fluorescence, and the third fluorescence that have not transmitted through the first inclined filter. T1 schematically indicates transmittance in a transmission wavelength range of the fluorescence filter unit 3a. As illustrated in part (b) of FIG. 5, magnitudes of the fluorescence intensities are approximately the same in the second optical state, but as illustrated in part (a) of FIG. 5, in the first optical state, the fluorescence intensity FI1 of the first fluorescence, the fluorescence intensity FI2 of the second fluorescence, and the fluorescence intensity FI3 of the third fluorescence are increased in this order. This is because the transmittance of the first inclined filter 13 linearly increases as the wavelength increases.

For the first fluorescent image and the second fluorescent image acquired for each of the first to M-th excitation lights, the intensity ratio calculation unit 202 calculates an intensity ratio that is a ratio between an intensity value of a pixel of the first fluorescent image and an intensity value of a pixel of the second fluorescent image corresponding to the pixel, and calculates the intensity ratio for each of the first to M-th excitation lights. Here, when an intensity ratio that is a ratio between an intensity value in an n-th pixel (n is an integer of 1 or more and N or less) of the first fluorescent image and an intensity value in an n-th pixel of the second fluorescent image with respect to m-th excitation light (m is an integer of 1 or more and M or less) is $R_{mn}$, the intensity ratio calculation unit 202 calculates the intensity ratio $R_{mn}$ based on the measured intensity values. In the first embodiment, the intensity ratio is a ratio of the intensity value of the pixel of the first fluorescent image to the intensity value of the pixel of the second fluorescent image. The intensity ratio may be a ratio of the intensity value of the pixel of the second fluorescent image to the intensity value of the pixel of the first fluorescent image.

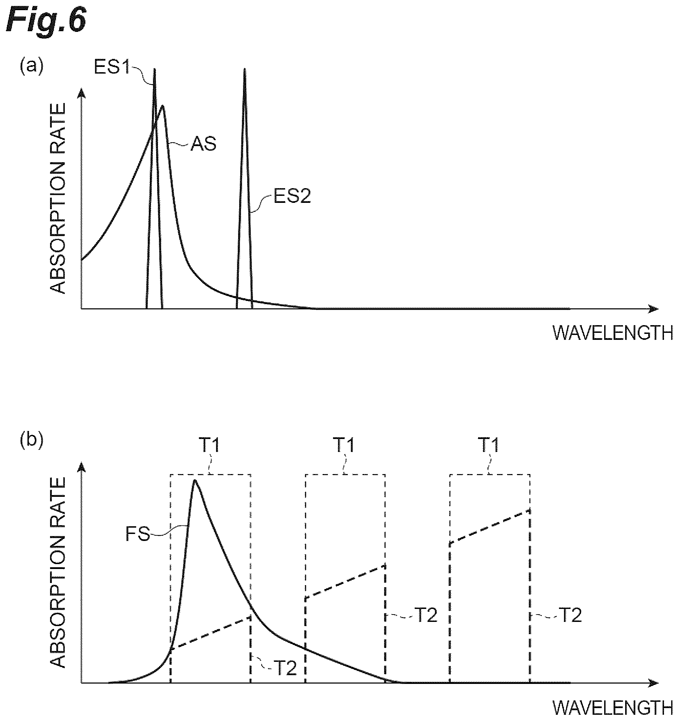

Characteristics of an intensity ratio $R_{11}$ in the first pixel with respect to the first excitation light and an intensity ratio $R_{21}$ in the first pixel with respect to the second excitation light will be described as an example with reference to FIG. 6. In FIG. 6, as an example, it is assumed that one kind of first dye is irradiated with the first excitation light and the second excitation light.

Part (a) of FIG. 6 schematically illustrates excitation light spectra ES1 and ES2 of the first excitation light and the second excitation light with respect to an absorption spectrum AS of the first dye. Part (b) of FIG. 6 schematically illustrates transmittance T1 in the transmission wavelength range of the fluorescence filter unit 3a and transmittance T2 of the first inclined filter 13 in which the transmittance T1 is taken into consideration with respect to a fluorescence spectrum FS of the first dye. Here, when the wavelength is $\lambda$, the absorption spectrum AS is $f_{AS}(\lambda)$, the excitation light spectrum ES1 is $f_{ES1}(\lambda)$, the excitation light spectrum ES2 is $f_{ES2}(\lambda)$, the fluorescence spectrum FS is $f_{FS}(\lambda)$, the transmittance T1 is $S_{T1}(\lambda)$, and the transmittance T2 is $S_{T2}(\lambda)$, an intensity value $I_{11}$ of the first pixel acquired in the first optical state when the first excitation light is emitted can be calculated as in the following Formula (1). On the other hand, an intensity value $I_{12}$ of the first pixel acquired in the second optical state when the first excitation light is emitted can be calculated as in the following Formula (2).

[Mathematical Formula 1]

$$I_{11} = \int f_{AS}(\lambda) f_{ES1}(\lambda) d\lambda \times \int f_{FS}(\lambda) S_{T2}(\lambda) d\lambda \quad \cdots (1)$$

$$I_{12} = \int f_{AS}(\lambda) f_{ES1}(\lambda) d\lambda \times \int f_{FS}(\lambda) S_{T1}(\lambda) d\lambda \quad \cdots (2)$$

An intensity value $I_{21}$ of the first pixel acquired in the first optical state when the second excitation light is emitted can be calculated as in the following Formula (3). On the other hand, an intensity value $I_{22}$ of the first pixel acquired in the second optical state when the second excitation light is emitted can be calculated as in the following Formula (4).

[Mathematical Formula 2]

$$I_{21} = \int f_{AS}(\lambda) f_{ES2}(\lambda) d\lambda \times \int f_{FS}(\lambda) S_{T2}(\lambda) d\lambda \quad \cdots (3)$$

$$I_{22} = \int f_{AS}(\lambda) f_{ES2}(\lambda) d\lambda \times \int f_{FS}(\lambda) S_{T1}(\lambda) d\lambda \quad \cdots (4)$$

From the above Formulas (1) and (2), the intensity ratio $R_{11}$ in the first pixel corresponding to the first excitation light is calculated as in the following Formula (5). From the above Formulas (3) and (4), the intensity ratio $R_{21}$ in the first pixel corresponding to the second excitation light is calculated as in the following Formula (6).

### [Mathematical Formula 3]

$$R_{11} = \frac{I_{11}}{I_{12}} = \frac{\int f_{FS}(\lambda)S_{T2}(\lambda)d\lambda}{\int f_{FS}(\lambda)S_{T1}(\lambda)d\lambda} \quad \cdots (5)$$

$$R_{21} = \frac{I_{21}}{I_{22}} = \frac{\int f_{FS}(\lambda)S_{T2}(\lambda)d\lambda}{\int f_{FS}(\lambda)S_{T1}(\lambda)d\lambda} \quad \cdots (6)$$

In the above Formula (5), $\int f_{AS}(\lambda)f_{ES1}(\lambda)d\lambda$, that is a value that depends on the first excitation light common to a denominator and a numerator, is canceled, so that the intensity ratio $R_{11}$ does not depend on the first excitation light. Similarly, the intensity ratio $R_{21}$ does not depend on the second excitation light. Therefore, as shown in the above Formulas (5) and (6), the intensity ratio $R_{11}$ and the intensity ratio $R_{21}$ have the same value. However, since the intensity ratio $R_{11}$ and the intensity ratio $R_{21}$ are actually calculated based on the measured intensity values, it should be noted that the intensity ratio $R_{11}$ and the intensity ratio $R_{21}$ do not necessarily have the same value due to an influence of a measurement error or the like.

Here, an intensity ratio $R'_{11}$ in the first pixel corresponding to the first excitation light and an intensity ratio $R'_{21}$ in the first pixel corresponding to the second excitation light in a case where the first pixel is a pixel reflecting fluorescence from the second dye in addition to the first dye in a mixed manner will be described. It is assumed that an absorption spectrum of the second dye is $f'_{AS}(\lambda)$, and a fluorescence spectrum of the second dye is $f_{FS}(\lambda)$. The intensity ratios $R'_{11}$ and $R'_{21}$ are calculated as in the following Formulas (7) and (8).

### [Mathematical Formula 4]

$$R'_{11} = \frac{\int f'_{AS}(\lambda)f_{ES1}(\lambda)d\lambda \times \int f'_{FS}(\lambda)S_{T2}(\lambda)d\lambda + \int f_{AS}(\lambda)f_{ES1}(\lambda)d\lambda \times \int f_{FS}(\lambda)S_{T2}(\lambda)d\lambda}{\int f'_{AS}(\lambda)f_{ES1}(\lambda)d\lambda \times \int f'_{FS}(\lambda)S_{T1}(\lambda)d\lambda + \int f_{AS}(\lambda)f_{ES1}(\lambda)d\lambda \times \int f_{FS}(\lambda)S_{T1}(\lambda)d\lambda} \quad \cdots (7)$$

$$R'_{21} = \frac{\int f'_{AS}(\lambda)f_{ES2}(\lambda)d\lambda \times \int f'_{FS}(\lambda)S_{T2}(\lambda)d\lambda + \int f_{AS}(\lambda)f_{ES2}(\lambda)d\lambda \times \int f_{FS}(\lambda)S_{T2}(\lambda)d\lambda}{\int f'_{AS}(\lambda)f_{ES2}(\lambda)d\lambda \times \int f'_{FS}(\lambda)S_{T1}(\lambda)d\lambda + \int f_{AS}(\lambda)f_{ES2}(\lambda)d\lambda \times \int f_{FS}(\lambda)S_{T1}(\lambda)d\lambda} \quad \cdots (8)$$

In the above Formula (7), since a value depending on the first excitation light in a denominator and a numerator is not canceled, the intensity ratio $R'_{11}$ depends on the first excitation light. Similarly, the intensity ratio $R'_{21}$ depends on the second excitation light. That is, the intensity ratio $R'_{11}$ and the intensity ratio $R'_{21}$ do not have the same value.

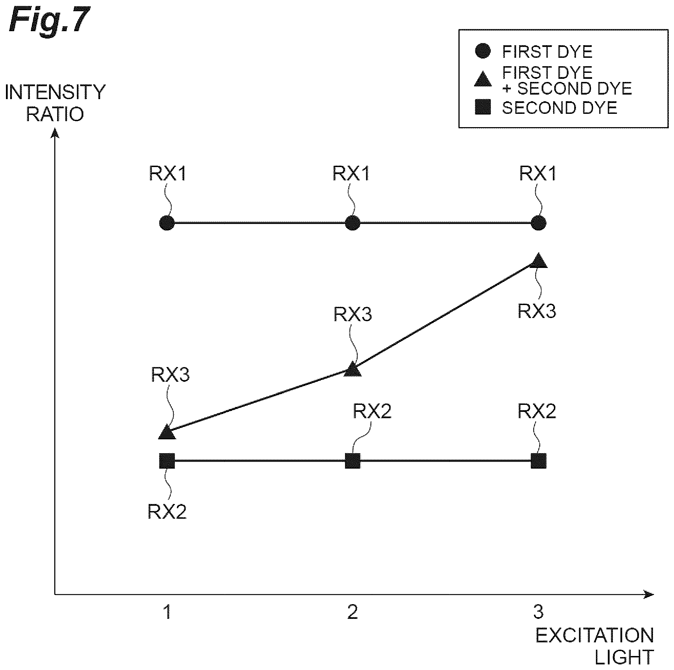

The characteristics of the above-described intensity ratios will be described. FIG. 7 is a graph schematically illustrating an intensity ratio RX1 in a case where fluorescence from the first dye is reflected in the first pixel, an intensity ratio RX2 in a case where fluorescence from the second dye is reflected in the first pixel, and an intensity ratio RX3 in a case where fluorescences from the first dye and the second dye are reflected in the first pixel in a mixed manner. FIG. 7 illustrates the intensity ratio for each of the first to third excitation lights. As illustrated in FIG. 7, the intensity ratio RX1 and the intensity ratio RX2 have the same value for each excitation light, whereas the intensity ratio RX3 has a different value for each excitation light. Further, as illustrated in FIG. 7, the intensity ratio RX1 and the intensity ratio RX2 have different values. This is because, as shown in the above Formulas (5) and (6), the transmittance T2 (that is, $S_{T2}$) of the first inclined filter 13 in which the transmittance T1 is taken into consideration is a value that depends on the wavelength $\lambda$, and the transmittance T1 (that is, $S_{T1}$) in the transmission wavelength range of the fluorescence filter unit 3a is a value dependent on the wavelength $\lambda$. When $S_{T1}$ and $S_{T2}$ are constants independent of the wavelength $\lambda$, the intensity ratio is a constant, and the intensity ratio RX1 and the intensity ratio RX2 have the same value. The single-color pixel discrimination unit 203 to be described later can discriminate whether the pixel is a single-color pixel based on such characteristics of the intensity ratios.

The single-color pixel discrimination unit 203 discriminates whether each pixel is a single-color pixel based on the intensity ratio for each of the first to M-th excitation lights. The single-color pixel discrimination unit 203 calculates each of $V_1$ to $V_N$, that is an index of variation in the intensity ratio for each of the first to M-th excitation lights in each of the first to N-th pixels, and discriminates whether each pixel is a single color based on the index. Hereinafter, a method of calculating the index $V_1$ in the first pixel by the single-color pixel discrimination unit 203 will be described. The single-color pixel discrimination unit 203 calculates indexes $V_2$ to $V_N$ similarly to the index $V_1$.

As an example, the single-color pixel discrimination unit 203 calculates the index $V_1$ by the following Formula (9). Here, $R_{ave1}$ is an average value of the intensity ratios $R_{11}$ to $R_{M1}$ of the first to M-th excitation lights in the first pixel. In this case, the single-color pixel discrimination unit 203 can easily calculate the index $V_1$. $R_{ave1}$ is calculated by, for example, the following Formula (10) or (11). Here, $y_{1i}$ is an intensity of the first pixel in the first optical state when i-th excitation light is emitted, and $y_{2i}$ is an intensity of the first pixel in the second optical state when the i-th excitation light is emitted. $R_{ave1}$ is not limited to the following Formulas (10) and (11), and $R_{ave1}$ may be a weighted average or an intermediate value of $R_{11}$ to $R_{M1}$.

[Mathematical Formula 5]

$$V_1 = \sum_{i=1}^{M} (R_{i1} - R_{ave1})^2 \quad \cdots (9)$$

$$R_{ave1} = \frac{1}{M} \sum_{i=1}^{M} R_{i1} \quad \cdots (10)$$

$$R_{ave1} = \frac{\sum_{i=1}^{M} y_{1i}}{\sum_{i=1}^{M} y_{2i}} \quad \cdots (11)$$

Alternatively, the single-color pixel discrimination unit 203 calculates the index $V_1$ by the following Formula (12). Here, $\sigma_{i1}$ is noise of $R_{i1}$. For example, in a case where the first camera 15 is a complementary metal-oxide semiconductor (CMOS) camera, the noise $\sigma_{i1}$ is calculated by the following Formula (13). Here, $y'_{1i}$ is an intensity when $y_{1i}$ is converted into the number of electrons, $y'_{2i}$ is an intensity when $y_{2i}$ is converted into the number of electrons, and $\varepsilon$ is a readout noise of the CMOS camera. When a shot noise is dominant, the readout noise $\varepsilon$ can be ignored. In the case of the following Formula (12), since the single-color pixel discrimination unit 203 follows a chi-square distribution with a degree of freedom M-1, it is possible to set a threshold to be described later regardless of the sample S.

[Mathematical Formula 6]

$$V_1 = \sum_{i=1}^{M} \frac{(R_{i1} - R_{ave1})^2}{\sigma_{i1}^2} \quad \cdots (12)$$

$$\sigma_{i1} = R_{i1} \sqrt{\frac{y'_{1i} + \varepsilon^2}{y'^2_{1i}} + \frac{y'_{2i} + \varepsilon^2}{y'^2_{2i}}} \cong R_{i1} \sqrt{\frac{1}{y'_{1i}} + \frac{1}{y'_{2i}}} \quad \cdots (13)$$

Alternatively, the single-color pixel discrimination unit 203 calculates the index $V_1$ by the following Formula (14). Here, p is a constant of 1 or more, $w_i$ is a weight corresponding to the i-th excitation light, and $RF_i$ is, for example, $R_{ave1}$, an intensity ratio calculated from dye reference information, and a statistical value of intensity ratios obtained from a plurality of pixels. $RF_i$ may be changed for each excitation light in consideration of measurement conditions, noise, influence of background light, and the like for each excitation light. Alternatively, any value may be used. In the following Formula (14), $R_{i1}$ may be replaced with a function $G(R_{i1})$ related to $R_{i1}$.

[Mathematical Formula 7]

$$V_1 = \sum_{i=1}^{M} w_i |R_{i1} - RF_i|^p \quad \cdots (14)$$

The indexes $V_1$ to $V_N$ are not limited to the indexes of the above Formulas (9) to (14), and may be indexes other than the above Formulas (9) to (14) as long as the variation in the intensity ratios can be evaluated.

The single-color pixel discrimination unit 203 discriminates whether each of the first to N-th pixels is a single-color pixel based on the indexes $V_1$ to $V_N$ calculated as described above. As an example, the single-color pixel discrimination unit 203 discriminates a pixel having an index of variation equal to or less than a threshold as a single-color pixel, and discriminates a pixel having an index of variation larger than the threshold as not a single-color pixel. The threshold may be a value set in advance by a user, or may be determined by the single-color pixel discrimination unit 203. Note that the case where the threshold is determined by the single-color pixel discrimination unit 203 is not limited to the case where the threshold is automatically determined by the single-color pixel discrimination unit 203, and the single-color pixel discrimination unit 203 may determine the threshold according to a parameter input from the user.

The clustering unit 204 performs clustering for a plurality of pixels (hereinafter, referred to as a "plurality of single-color pixels") discriminated to be single-color pixels by the single-color pixel discrimination unit 203. Prior to the clustering processing, the clustering unit 204 generates matrix data Y in which values of fluorescence intensities of N pixels constituting each of C (C is an integer of 2 or more) fluorescent images each including N pixels, the C fluorescent images acquired by irradiating a sample with each of excitation lights of C wavelength distributions, are arranged one-dimensionally in parallel. The C fluorescent images may be a collection of M first fluorescent images and M second fluorescent images acquired by the image acquisition device 3 by emitting the first to M-th excitation lights, or may be M second fluorescent images. Alternatively, C excitation lights may be emitted separately from the first to M-th excitation lights, and C fluorescent images imaged in the second optical state may be used.

As an example, the clustering unit 204 clusters the plurality of single-color pixels into L (L is an integer of 2 or more and N-1 or less) pixel groups based on an average value of the intensity ratios of each of the plurality of single-color pixels. Here, the number L of pixel groups to be clustered is set in advance as a parameter stored in the image processing device 4 in correspondence with, for example, the number of types of dyes that can exist in the sample S. The number L of pixel groups may be determined according to the type of excitation light and the number C of wavelength distributions of excitation lights, or may be determined independently of the type of excitation light and the number C of wavelength distributions of excitation lights. The average values of the intensity ratios of the single-color pixels of the same color are the same or close to each other. The clustering unit 204 clusters the plurality of single-color pixels into L pixel groups by determining a distance (closeness of values) between the average values of the intensity ratios for each of the plurality of single-color pixels. The clustering unit 204 regenerates the matrix data Y in which the fluorescence intensity values of the pixels of the C fluorescent images are one-dimensionally arranged in parallel by dividing into a cluster matrix for each of the L pixel groups. The average value of the intensity ratios of each of the plurality of single-color pixels is, for example, a simple average or a weighted average. The average value may be calculated using another calculation method. The clustering unit 204 may perform clustering based on an intermediate value of the intensity ratios of each of the plurality of single-color pixels. The clustering unit 204 may perform clustering based on the intensity for each of the C excitation lights of each of the plurality of single-color pixels.

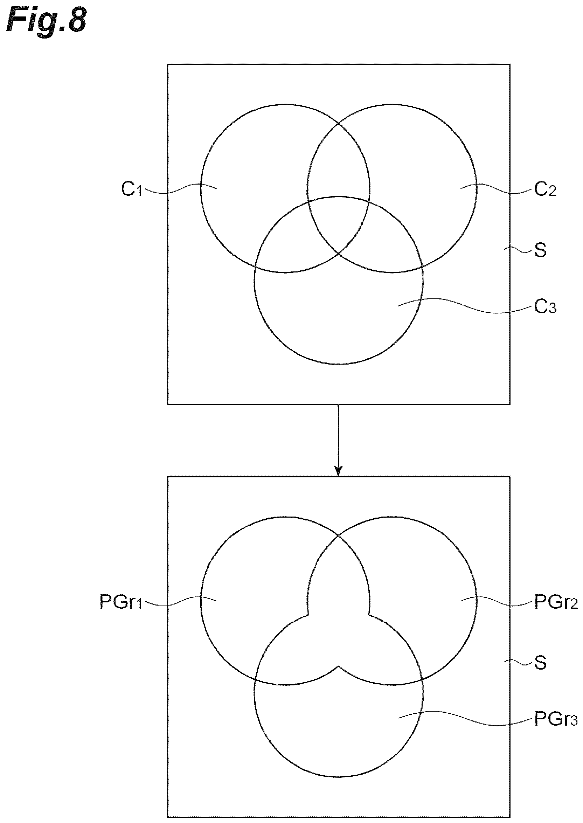

FIG. 8 illustrates an image of pixel groups clustered by the clustering unit 204. As illustrated in FIG. 8, the dyes included in the sample S are three types of dyes $C_1$, $C_2$, and $C_3$, and the clustering unit 204 clusters the plurality of single-color pixels into three pixel groups $PGr_1$ to $PGr_3$.

Based on L cluster matrices obtained for the sample S, the statistical value calculation unit 205 obtains a mixing matrix A for generating K dye images indicating the distribution of each of K (K is an integer of 2 or more and C or less) dyes from the C fluorescent images. In general, according to the calculation method of nonnegative matrix factorization (NMF), the relationship between the matrix data Y which is an observation value matrix and the dye matrix data X in which K dye images are arranged one-dimensionally in parallel for each pixel is expressed by the following formula by using the mixing matrix A;

$Y = AX$. Here, Y is matrix data of C rows and N columns, A is matrix data of C rows and K columns, and X is matrix data of K rows and N columns. On the contrary, when the value of the mixing matrix A is obtained, the dye matrix data X can be derived by the following formula by using an inverse matrix $A^{-1}$ of the mixing matrix A and the matrix data Y;
$X = A^{-1}Y$. This processing is called unmixing.

Here, the statistical value calculation unit 205 regenerates matrix data Y' by compressing the matrix data Y generated by the clustering unit 204 in units of pixel groups clustered by the clustering unit 204. Specifically, the statistical value calculation unit 205 calculates a statistical value for each pixel group of the clustered cluster matrix for the fluorescence intensity of each row of the matrix data Y, and compresses the pixel group of each row into one pixel having the calculated statistical value. As a result, the statistical value calculation unit 205 regenerates the matrix data Y' which is matrix data of C rows and L columns. The statistical value calculation unit 205 may calculate, as the statistical value, an average value based on the integrated value of the fluorescence intensities, may calculate a mode of the fluorescence intensities, or may calculate an intermediate value of the fluorescence intensities.

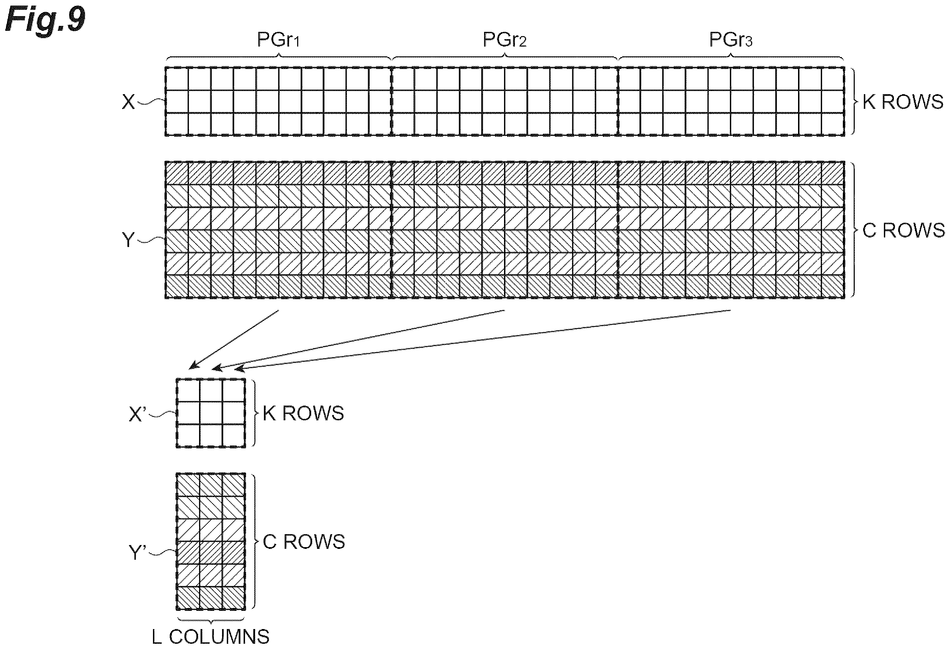

Further, the statistical value calculation unit 205 derives the mixing matrix A based on the matrix data Y' by utilizing the property that the following formula including the mixing matrix A holds true in the regenerated matrix data Y' and the dye matrix data X' compressed in the same manner from the dye matrix data X;
$Y' = AX'$. FIG. 9 illustrates an image of the matrix data Y' regenerated by the statistical value calculation unit 205 and the dye matrix data X' corresponding thereto. One grid illustrated in FIG. 9 represents one element of the matrix data. As described above, the dye matrix data X and the matrix data Y divided into the three pixel groups PGr₁ to PGr₃ are data compressed into the dye matrix data X' and the matrix data Y' of three columns with the statistical value for each of the pixel groups PGr₁ to PGr₃ as a representative value.

The statistical value calculation unit 205 derives the mixing matrix A based on the matrix data Y' as follows. That is, the statistical value calculation unit 205 sets an initial value to the mixing matrix A, calculates the loss function (loss value) Los of the following Formula (15) while sequentially changing the value of the mixing matrix A, and derives the mixing matrix A that reduces the value of the loss function Los. Note that a regularization term such as L1 norm $\lambda$ |A| ($\lambda$ is a coefficient indicating a degree to which the regularization term is emphasized) may be added to the loss function.

[Mathematical Formula 8]

$$Los = \sum_{j}^{c} \frac{1}{a}(Y' - AX')_{1j}{}^2 + \sum_{j}^{c} \frac{1}{b}(Y' - AX')_{2j}{}^2 + \sum_{j}^{c} \frac{1}{c}(Y' - AX')_{3j}{}^2 \quad \cdots (15)$$

In the above Formula (15), j is a parameter indicating a position (corresponding to the wavelength band of the excitation light) of a row of the matrix data, a subscript 1j of the matrix indicates matrix data of a j-th row of the first cluster matrix, a subscript 2j of the matrix indicates matrix data of a j-th row of the second cluster matrix, and a subscript 3j of the matrix indicates matrix data of a j-th row of the third cluster matrix. In addition, the parameters a, b, and c indicate the average values of the statistical values of the respective columns of the matrix data Y'.

As described above, the statistical value calculation unit 205 calculates the loss function with reference to the statistical values of the C pieces of matrix data Y' for each of the L cluster matrices divided by the clustering unit 204, calculates the loss function Los based on a sum of the L loss functions, and obtains the mixing matrix A based on the loss function Los. At this time, the statistical value calculation unit 205 corrects the loss function calculated for each of the L cluster matrices by dividing the loss function by the average values a, b, and c of the statistical values of the C pieces of matrix data Y', and then calculates a sum of the corrected loss functions to obtain the loss function Los. Note that the statistical value calculation unit 205 may calculate the loss function for each of the L cluster matrices by correcting the loss function by dividing the row component for each wavelength band of the excitation light having a difference value Y' - AX' by using the C statistical values corresponding to each wavelength band of the excitation light.

Alternatively, the statistical value calculation unit 205 may generate the mixing matrix A as follows. The statistical value calculation unit 205 may calculate the statistical value for each of the L clustered pixel groups for each of the C fluorescent images, and may arrange the calculated statistical value for each of the C fluorescent images to generate a mixing matrix A of C rows and L columns. That is, the mixing matrix A may be the same as the matrix data Y'. In this case, the number of clusters is equal to the number of dyes, and the mixing matrix A can be generated more easily.

The image generation unit 206 acquires K dye images by unmixing the C fluorescent images obtained for the sample S to be observed by using the mixing matrix A derived by the statistical value calculation unit 205. Specifically, the image generation unit 206 calculates the dye matrix data X by applying the inverse matrix A⁻¹ of the mixing matrix A to the matrix data Y generated by the clustering unit 204 based on the C fluorescent images. Then, the image generation unit 206 regenerates K dye images from the dye matrix data X, and outputs the regenerated K dye images. The output destination at this time may be an output device of the image processing device 4 such as a display or a touch panel display, or may be an external device connected to the image processing device so as to be capable of data communication.

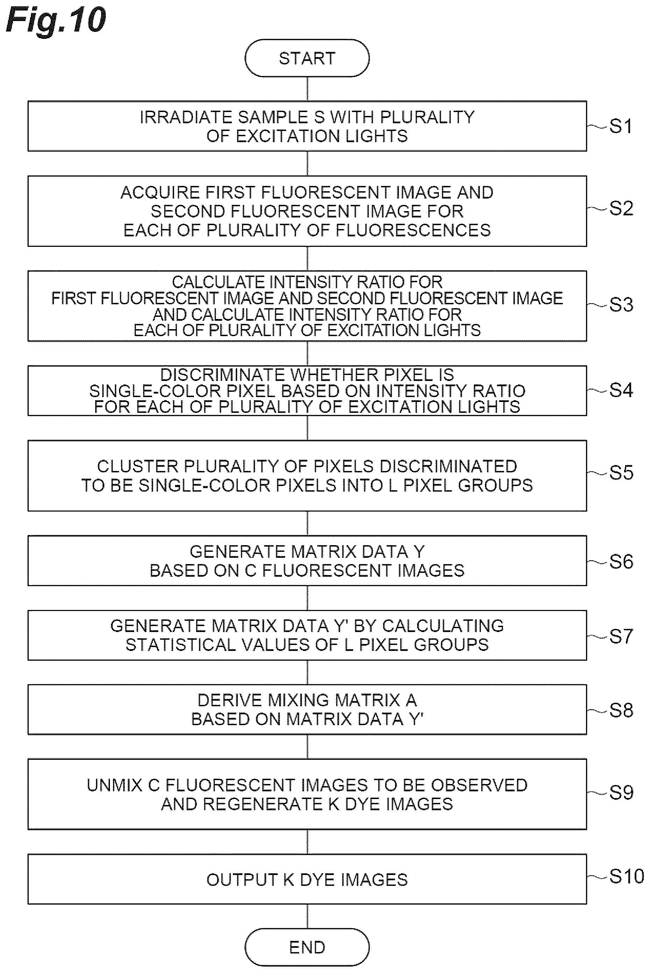

Next, a procedure of observation processing on the sample S using the fluorescent image acquisition system 1 according to the first embodiment, that is, a flow of a fluorescent image acquisition method according to the first embodiment will be described. FIG. 10 is a flowchart illustrating a procedure of observation processing by the fluorescent image acquisition system 1.

First, the sample S is irradiated with each of excitation lights of a plurality of wavelength distributions by the irradiation device 2 (step S1; irradiation step). Next, the image acquisition unit 201 of the image processing device 4 acquires, with respect to each of the plurality of fluorescences corresponding to each of the plurality of excitation lights, the first fluorescent image in the first optical state and the second fluorescent image in the second optical state in which fluorescence is measured at a wavelength characteristic different from that in the first optical state through the fluorescence filter unit 3a (step S2; acquisition step). In the first embodiment, step S2 includes a first acquisition step of imaging fluorescence in the first optical state to acquire a first fluorescent image, and a second acquisition step of imaging fluorescence in the second optical state to acquire a second fluorescent image. Note that steps S1 and S2 may be repeated alternately. For example, after the first excitation light is emitted in the irradiation step and the first fluorescent image is acquired in the first acquisition step, the process may return to the irradiation step to emit the first excitation light, and the second fluorescent image may be acquired in the second acquisition step. After that, the process may further return to the irradiation step to emit the second excitation light.

Furthermore, the intensity ratio calculation unit 202 of the image processing device 4 calculates, for the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights (step S3; calculation step). Next, the single-color pixel discrimination unit 203 of the image processing device 4 discriminates whether the pixel is a single-color pixel based on the intensity ratio for each of the plurality of excitation lights (step S4; discrimination step).

Furthermore, the clustering unit 204 of the image processing device 4 clusters, into L pixel groups, a plurality of pixels discriminated to be single-color pixels in the discrimination step, with respect to C fluorescent images that are acquired by irradiating the sample with each of the excitation lights of the C wavelength distributions, the C fluorescent images each including N pixels (step S5; clustering step). Next, the clustering unit 204 of the image processing device 4 generates matrix data Y in which N pixels of the C fluorescent images are arranged in parallel (step S6; clustering step).

Next, the statistical value calculation unit 205 of the image processing device 4 calculates statistical values of the L pixel groups, thereby regenerating matrix data Y' based on the matrix data Y generated by the clustering unit 204 (step S7; calculation step). Next, the statistical value calculation unit 205 of the image processing device 4 derives a mixing matrix A based on the matrix data Y' (step S8; image generation step). Next, the image generation unit 206 of the image processing device 4 unmixes the matrix data Y generated based on the C fluorescent images for the sample S using the mixing matrix A, so that K dye images are regenerated (step S9; image generation step). Finally, the image generation unit 206 of the image processing device 4 outputs the regenerated K dye images (step S10). Thus, the observation processing for the sample S is completed.

According to the fluorescent image acquisition system 1 according to the first embodiment described above, with respect to each of the plurality of fluorescences corresponding to each of the plurality of excitation lights, the first fluorescent image in the first optical state and the second fluorescent image in the second optical state in which fluorescence is measured at a wavelength characteristic different from that in the first optical state are acquired. Furthermore, the intensity ratio that is a ratio between the intensity value of the pixel of the first fluorescent image and the intensity value of the pixel of the second fluorescent image is calculated, and the intensity ratio for each of the plurality of excitation lights is calculated. In addition, whether the pixel is a single-color pixel is discriminated based on the intensity ratio for each of the plurality of excitation lights. As a result, even in a fluorescent image including a pixel in which fluorescences from a plurality of dyes are reflected in a mixed manner and a single-color pixel in which single-color fluorescence from a single dye is reflected, a single-color pixel can be discriminated from a plurality of pixels of the fluorescent image. That is, it is possible to discriminate a single-color pixel in a fluorescent image.

The above operation and effect will be specifically described. According to the fluorescent image acquisition system 1 of the first embodiment, the intensity ratio calculation unit 202 calculates the intensity ratio $R_{mn}$ that is the ratio of the intensity values in the n-th pixel. In a case where the n-th pixel is a single-color pixel, intensity ratios $R_{1n}$ to $R_{Mn}$ have the same value, or the intensity ratios $R_{1n}$ to $R_{Mn}$ are close to each other as compared with a case where the n-th pixel is not a single-color pixel. Based on such a characteristic, the single-color pixel discrimination unit 203 calculates an index of variation with respect to the intensity ratios $R_{1n}$ to $R_{Mn}$, and discriminates whether the index is equal to or less than a threshold, whereby it is possible to discriminate whether the n-th pixel is a single-color pixel.

Furthermore, in the first embodiment, the acquisition step (step S2) includes: a first acquisition step of, with respect to each of the plurality of fluorescences, imaging the fluorescence in the first optical state using the first optical filter 13 having transmittance different in each reflection wavelength range or each transmission wavelength range of the fluorescence filter unit 3a to acquire the first fluorescent image, and a second acquisition step of, with respect to each of the plurality of fluorescences, imaging the fluorescence in the second optical state to acquire the second fluorescent image. As a result, the accuracy of discrimination of the single-color pixel can be improved. Furthermore, by using the first optical filter 13, transmission characteristics or reflection characteristics of a plurality of fluorescences can be changed among a plurality of wavelength ranges, and single-color images of a plurality of colors can be further discriminated. In addition, the first optical state can be easily acquired by using the first optical filter 13, and the first fluorescent image can be easily acquired.

In the first embodiment, the first optical filter 13 is the first inclined filter 13 of which the transmittance monotonously changes over each transmission wavelength range. By using the first inclined filter 13, the transmittance can be monotonously changed over each transmission wavelength range, and the single-color images of the plurality of colors can be discriminated more accurately. Furthermore, the first optical state can be easily acquired by using the first inclined filter 13, and the first fluorescent image can be easily acquired.

In the first embodiment, in the second acquisition step, fluorescence is imaged in the second optical state in which the first optical filter 13 is removed. Since the second optical state can be acquired by removing the first optical filter 13, the second optical state can be acquired more easily. Therefore, the second fluorescent image can be acquired more easily.

Further, in the first embodiment, the image processing device 4 clusters, for C (C is an integer of 2 or more) fluorescent images acquired by irradiating a sample with each of excitation lights of C wavelength distributions, the C fluorescent images each including N (N is an integer of 2 or more) pixels, the plurality of pixels discriminated to be single-color pixels into L (L is an integer of 2 or more and N-1 or less) pixel groups, and generates L cluster matrices in which the C fluorescent images are arranged for each of the clustered pixel groups, calculates statistical values of the intensity values of the pixel groups constituting the C fluorescent images for each of the L cluster matrices, and performs unmixing on the C fluorescent images by using the statistical values of the C fluorescent images for each of the L cluster matrices, and generates K (K is an integer of 2 or more and C or less) fluorescent images indicating a distribution for each of K dyes. In this case, a plurality of pixels discriminated to be single-color pixels are clustered into L pixel groups, and L cluster matrices in which C fluorescent images acquired by irradiating the sample with each of excitation lights of the C wavelength distributions are arranged for each of the clustered pixel groups are generated. In addition, the statistical values of the intensity values of the pixel groups configuring the C fluorescent images are calculated for each of the L cluster matrices, and the C fluorescent images are unmixed by using the statistical values of the respective C fluorescent images to generate K fluorescent images. This makes it possible to obtain a separated image for each dye with high accuracy.

The above operation and effect will be specifically described. In the first embodiment, since the first inclined filter 13 has the transmittance that depends on the wavelength $\lambda$, the intensity ratios of the single-color pixels indicating the same single color are the same value or values close to each other. Based on such a characteristic, the clustering unit 204 can cluster the plurality of single-color pixels into L pixel groups, for example, by determining a distance (closeness of values) between average values of the intensity ratios for each of the plurality of single-color pixels. The average value of the intensity ratios for each of the plurality of single-color pixels is, for example, a simple average or a weighted average. The average value may be calculated using another calculation method. The clustering unit 204 may perform clustering by determining a distance between intermediate values of the intensity ratios for each of the plurality of single-color pixels. The clustering unit 204 may perform clustering based on the intensities for each of the C excitation lights for each of the plurality of single-color pixels.

[Second Embodiment]

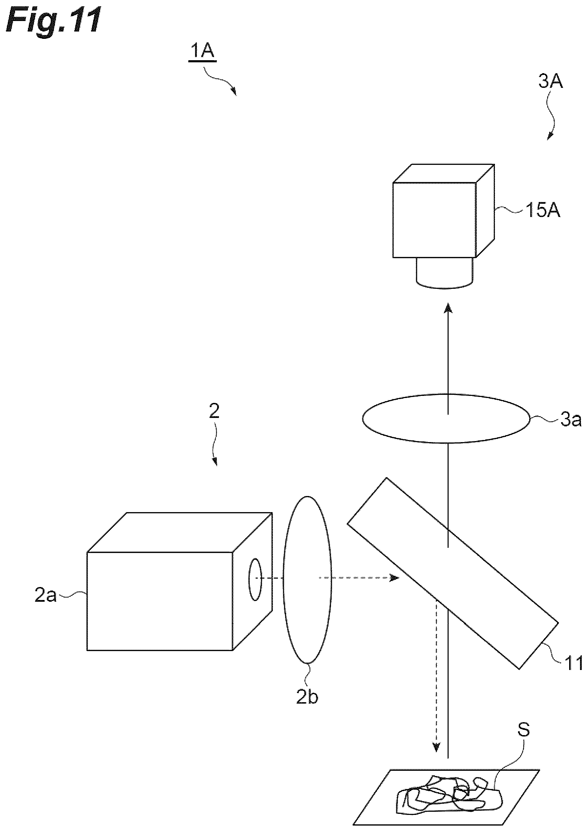

A second embodiment of the present disclosure will be described. FIG. 11 is a schematic configuration diagram of a fluorescent image acquisition system 1A that is a fluorescent image acquisition device according to the second embodiment. In the fluorescent image acquisition system 1A, the configuration of an image acquisition device 3A is different from the configuration of the image acquisition device 3 of the fluorescent image acquisition system 1. The image acquisition device 3A does not include the first optical filter 13. The image acquisition device 3A includes a first camera 15A having a configuration different from that of the first camera 15.

The first camera 15A is a camera that acquires at least two or more fluorescent images obtained by measuring fluorescence from the sample S at different wavelength characteristics. The first camera 15A can image each of the plurality of fluorescences to acquire a plurality of fluorescent images including at least a first fluorescent image and a second fluorescent image. In the second embodiment, for example, a color camera or a hyperspectral camera can be used as the first camera 15A.

In a case where a color camera is used as the first camera 15A, for example, a plurality of images separated for each of RGB components can be acquired by imaging each of the plurality of fluorescences once. As an example, the color camera acquires a plurality of images separated for each of RGB components as follows. The color camera is provided with specific color filters, for example, red, green, and blue color filters corresponding to each pixel on a solid-state imaging element. An element provided with a red filter is referred to as an R element, an element provided with a green filter is referred to as a G element, and an element provided with a blue filter is referred to as a B element. In the color camera, the R element, the G element, and the B element are arranged in a mosaic form. The B element acquires only the B component (blue component) of fluorescence, and the R component (red component) and the G component (green component) of fluorescence in the B element are interpolated by Bayer conversion processing. By performing similar processing on the R element and the G element, the color camera can acquire a plurality of images separated for each of RGB components. The Bayer conversion processing refers to processing of compensating for insufficient colors from surrounding elements with a certain algorithm. The image acquisition unit 201 can acquire a first fluorescent image and a second fluorescent image from the plurality of images separated for each of RGB components. In the following description, it is assumed that an image of the G component is referred to as a first fluorescent image, and an image of the B component is referred to as a second fluorescent image.

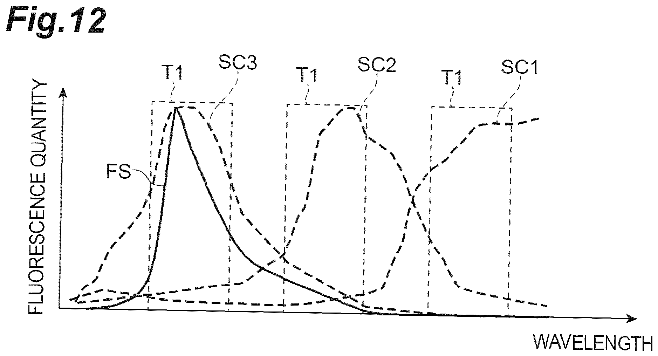

The intensity ratio of each pixel in a case where the color camera is used will be described with reference to FIG. 12. FIG. 12 is a diagram schematically illustrating spectral characteristics of each filter with respect to a fluorescence spectrum. SC1 is a spectral characteristic of the red filter, SC2 is a spectral characteristic of the green filter, and SC3 is a spectral characteristic of the blue filter. When the sample S is irradiated with the first excitation light, an intensity $IA_{11}$ of the pixel of the first fluorescent image which is the image of the G component, an intensity $IA_{12}$ of the pixel of the second fluorescent image that is the image of the B component, and an intensity ratio $RA_{11}$ are calculated, for example, as in the following Formulas (16) to (18). Here, it is assumed that the spectral characteristic of the green filter is $S_G(\lambda)$, and the spectral characteristic of the blue filter is $S_B(\lambda)$. Similarly to the first embodiment, in the case of the single-color pixel, the intensity ratio does not depend on the first excitation light. Therefore, also in the second embodiment, it is possible to discriminate whether each pixel is a single-color pixel by calculating the intensity ratio for each of the plurality of excitation lights. Note that the intensity of each pixel may be multiplied by a coefficient generated at the time of the Bayer conversion processing. Since the coefficient does not depend on the excitation light, the intensity ratio of the single-color pixel does not depend on the excitation light even when the coefficient is multiplied.

[Mathematical Formula 9]

$$IA_{11} = \int f_{AS}(\lambda)f_{ES1}(\lambda)d\lambda \times \int f_{FS}(\lambda)S_{T1}(\lambda)S_G(\lambda)d\lambda \quad \cdots (16)$$

$$IA_{12} = \int f_{AS}(\lambda)f_{ES1}(\lambda)d\lambda \times \int f_{FS}(\lambda)S_{T1}(\lambda)S_B(\lambda)d\lambda \quad \cdots (17)$$

$$RA_{11} = \frac{IA_{11}}{IA_{12}} = \frac{\int f_{FS}(\lambda)S_{T1}(\lambda)S_G(\lambda)d\lambda}{\int f_{FS}(\lambda)S_{T1}(\lambda)S_B(\lambda)d\lambda} \quad \cdots (18)$$

In a case where a hyperspectral camera is used as the first camera 15A, a plurality of images separated for different wavelength characteristics can be acquired by imaging each of the plurality of fluorescences once. As an example, the hyperspectral camera acquires a plurality of images separated for different wavelength characteristics as follows. In the hyperspectral camera, filters of various wavelength bands are formed in a mosaic shape in each pixel on the solid-state imaging element. For example, each pixel includes filters of $4 \times 4 = 16$ wavelength bands, and each pixel has information of 16 wavelength bands. Thereby, the hyperspectral camera can acquire a plurality of images separated for, for example, 16 different wavelength characteristics. The image acquisition unit 201 acquires the first fluorescent image and the second fluorescent image from the plurality of images separated for different wavelength characteristics. In the following description, assuming that each of the 16 wavelength bands of the hyperspectral camera corresponds to each of the wavelengths of 465 nm, 474 nm, 485 nm, 496 nm, 510 nm, 522 nm, 534 nm, 546 nm, 548 nm, 562 nm, 578 nm, 586 nm, 600 nm, 608 nm, 624 nm, and 630 m as an example, an image acquired by a filter of a wavelength band corresponding to 474 nm is referred to as a first fluorescent image, and an image acquired by a filter of a wavelength band corresponding to 630 nm is referred to as a second fluorescent image.

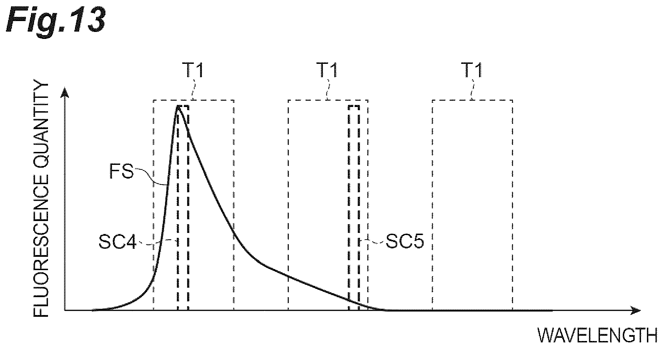

The intensity ratio of each pixel in a case where the hyperspectral camera is used will be described with reference to FIG. 13. FIG. 13 is a diagram schematically illustrating spectral characteristics of each filter with respect to the fluorescence spectrum. SC4 is a spectral characteristic of the filter of the wavelength band corresponding to 474 nm, and SC5 is a spectral characteristic of the filter of the wavelength band corresponding to 630 nm. When the sample S is irradiated with the first excitation light, an intensity $IB_{11}$ of the pixel of the first fluorescent image, an intensity $IB_{12}$ of the pixel of the second fluorescent image, and an intensity ratio $RB_{11}$ are calculated as in the following Formulas (19) to (21), for example. Here, it is assumed that a spectral characteristic of a filter of a wavelength band corresponding to 474 nm is $S_{474}(\lambda)$, and a spectral characteristic of a filter of a wavelength band corresponding to 630 nm is $S_{630}(\lambda)$. Similarly to the first embodiment, in the case of the single-color pixel, the intensity ratio does not depend on the first excitation light. Therefore, also in the second embodiment, it is possible to discriminate whether each pixel is a single-color pixel by calculating the intensity ratio for each of the plurality of excitation lights.

[Mathematical Formula 10]

$$IB_{11} = \int f_{AS}(\lambda)f_{ES1}(\lambda)d\lambda \times \int f_{FS}(\lambda)S_{T1}(\lambda)S_{474}(\lambda)d\lambda \quad \cdots (19)$$

$$IB_{12} = \int f_{AS}(\lambda)f_{ES1}(\lambda)d\lambda \times \int f_{FS}(\lambda)S_{T1}(\lambda)S_{630}(\lambda)d\lambda \quad \cdots (20)$$

$$RB_{11} = \frac{IB_{11}}{IB_{12}} = \frac{\int f_{FS}(\lambda)S_{T1}(\lambda)S_{474}(\lambda)d\lambda}{\int f_{FS}(\lambda)S_{T1}(\lambda)S_{630}(\lambda)d\lambda} \quad \cdots (21)$$

Alternatively, the hyperspectral camera may disperse the fluorescence by a spectroscope instead of dispersing the fluorescence by the filter on the solid-state imaging element. In such a hyperspectral camera, for example, fluorescence is incident on the spectroscope through a lens to disperse the fluorescence into a plurality of wavelength bands, and fluorescence for each wavelength band is received by an imaging element, whereby each pixel has information of the plurality of wavelength bands. Even with such a hyperspectral camera, it is possible to acquire a plurality of images separated for different wavelength characteristics. Therefore, the image acquisition unit 201 can acquire the first fluorescent image and the second fluorescent image from the plurality of images separated for different wavelength characteristics.

Also in the fluorescent image acquisition system 1A according to the second embodiment, the first fluorescent image and the second fluorescent image are acquired by the image acquisition device 3A imaging each of the plurality of fluorescences. Therefore, the fluorescent image acquisition system 1A also achieves the same operation and effect as those of the fluorescent image acquisition system 1 according to the first embodiment. Furthermore, both the first fluorescent image and the second fluorescent image can be acquired by imaging each of the plurality of fluorescences once. Therefore, the first fluorescent image and the second fluorescent image can be efficiently acquired.

Furthermore, in the second embodiment, the image acquisition device 3A images each of a plurality of fluorescences using, for example, a color camera. For example, a plurality of images separated for each of RGB components can be acquired by imaging each of the plurality of fluorescences once using the color camera. The first fluorescent image and the second fluorescent image can be acquired from the plurality of images.

In addition, in the second embodiment, the image acquisition device 3A images each of the plurality of fluorescences using, for example, a hyperspectral camera. By imaging each of the plurality of fluorescences once using the hyperspectral camera, a plurality of images separated for different wavelength characteristics can be acquired. The first fluorescent image and the second fluorescent image can be acquired from the plurality of images.

[Third Embodiment]

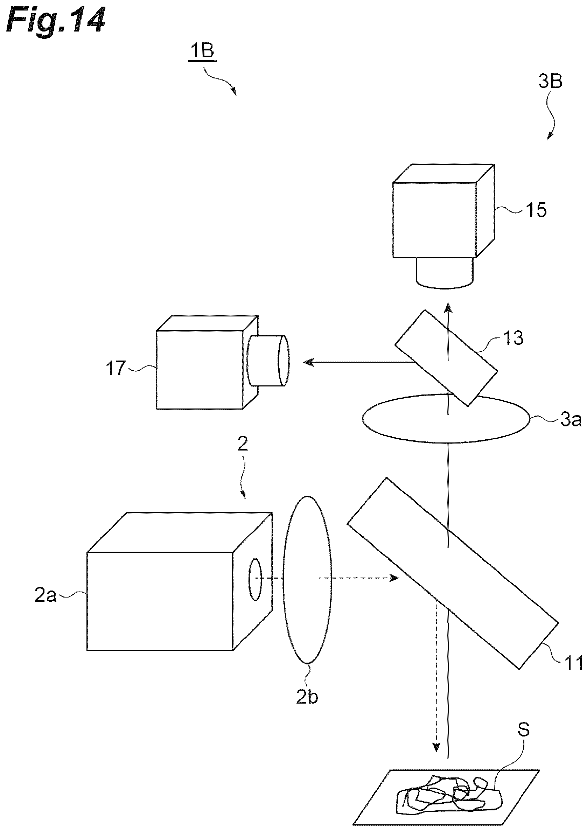

A third embodiment of the present disclosure will be described. FIG. 14 is a schematic configuration diagram of a fluorescent image acquisition system 1B that is a fluorescent image acquisition device according to the third embodiment. An image acquisition device 3B of the fluorescent image acquisition system 1B further includes a second camera 17 in addition to the configuration of the image acquisition device 3 of the fluorescent image acquisition system 1.

The second camera 17 is, for example, a camera having the same configuration as the first camera 15. The second camera 17 is a camera that images fluorescence reflected by the first inclined filter 13 to acquire a second fluorescent image when the first inclined filter 13 is provided on the optical path of the fluorescence. That is, in the fluorescent image acquisition system 1B, the fluorescence transmitted through the first inclined filter 13 is imaged by the first camera 15 to acquire a first fluorescent image, and the fluorescence reflected by the first inclined filter 13 is imaged by the second camera 17 to acquire a second fluorescent image.

Also in the fluorescent image acquisition system 1B according to the third embodiment, the first fluorescent image and the second fluorescent image are acquired by imaging the fluorescence transmitted through the first inclined filter 13 by the first camera 15 and imaging the fluorescence reflected by the first inclined filter 13 by the second camera 17. Therefore, the fluorescent image acquisition system 1B also achieves the same operation and effect as those of the fluorescent image acquisition system 1 according to the first embodiment.

[Fourth Embodiment]

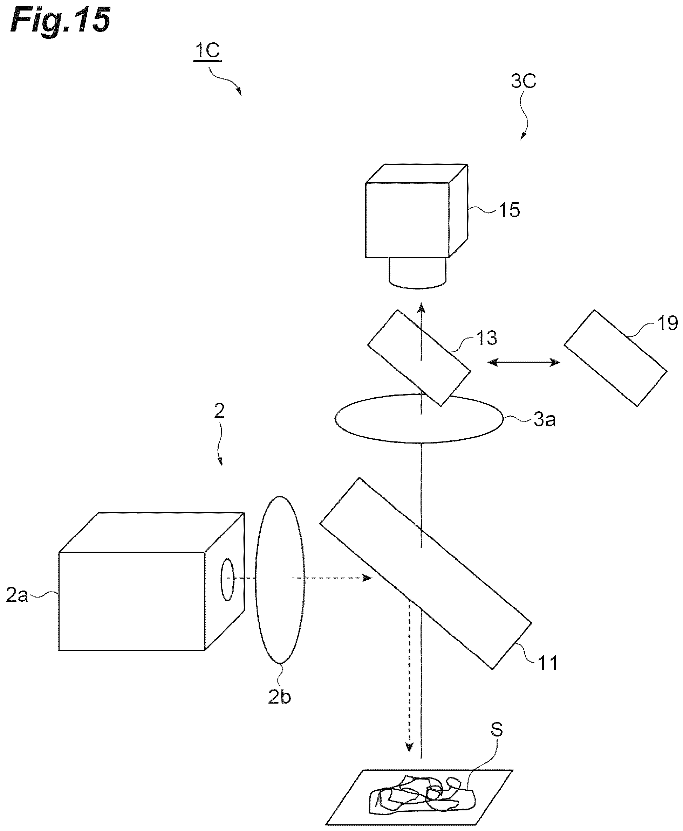

A fourth embodiment of the present disclosure will be described. FIG. 15 is a schematic configuration diagram of a fluorescent image acquisition system 1C that is a fluorescent image acquisition device according to the fourth embodiment. An image acquisition device 3C of the fluorescent image acquisition system 1C further includes a second optical filter 19 in addition to the configuration of the image acquisition device 3 of the fluorescent image acquisition system 1. The image acquisition device 3C is provided with a switching mechanism (not illustrated) that enables switching between the first optical filter 13 and the second optical filter 19 so as to switch from a state in which the first optical filter 13 is provided on the optical path of the fluorescence from the fluorescence filter unit 3a to a state in which the second optical filter 19 is provided on the optical path of the fluorescence from the fluorescence filter unit 3a.

The second optical filter 19 is a filter having transmittance different from that of the first optical filter 13 and having transmittance different in each reflection wavelength range or each transmission wavelength range of the fluorescence filter unit 3a. In the fourth embodiment, the second optical filter 19 is an inclined filter having a wavelength characteristic of transmittance in which the transmittance linearly decreases as the wavelength increases. That is, the transmittance of the second optical filter 19 monotonously decreases over each transmission wavelength range of the fluorescence filter unit 3a. In the following description of the fourth embodiment, the second optical filter 19, which is such an inclined filter, is also referred to as a second inclined filter 19. The second inclined filter 19 exhibits a change in transmittance different from that of the first inclined filter 13. The second optical filter 19 may be an inclined filter having a wavelength characteristic of transmittance in which the transmittance linearly increases as the wavelength increases. The second optical filter 19 may be an inclined filter of which transmittance monotonously changes over each reflection wavelength range of the fluorescence filter unit 3a.

When the first inclined filter 13 is provided on the optical path of the fluorescence, the first camera 15 images the fluorescence to acquire the first fluorescent image. In addition, when the second inclined filter 19 is provided on the optical path of fluorescence, the first camera 15 images the fluorescence to acquire the second fluorescent image.

Also in the fluorescent image acquisition system 1C according to the fourth embodiment, fluorescence is imaged when the first inclined filter 13 is provided on the optical path of the fluorescence, and fluorescence is imaged when the second inclined filter 19 is provided on the optical path of the fluorescence, whereby the first fluorescent image and the second fluorescent image are acquired. Therefore, the fluorescent image acquisition system 1C also achieves the same operation and effect as those of the fluorescent image acquisition system 1 according to the first embodiment.

In addition, in the fourth embodiment, the image acquisition device 3C images the fluorescence in the second optical state using the second inclined filter 19 exhibiting a change in transmittance different from that of the first inclined filter 13. By using the second inclined filter 19, the transmittance can be monotonously changed over each transmission wavelength range, and single-color images of a plurality of colors can be discriminated more accurately. Furthermore, the second optical state can be easily acquired by using the second inclined filter 19, and the second fluorescent image can be easily acquired.

In addition, in the fourth embodiment, the image acquisition device 3C images fluorescence in the second optical state using the second optical filter 19 having transmittance different from that of the first optical filter 13. By using the second optical filter 19, the second optical state can be easily acquired, and the second fluorescent image can be easily acquired.

[Generation Example of Fluorescent Image]

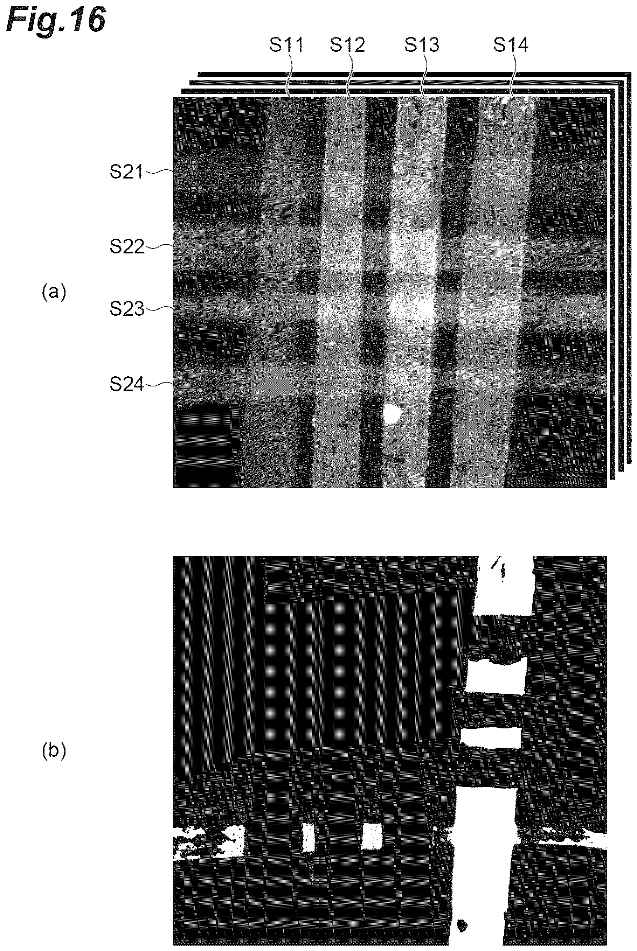

A generation example of a fluorescent image by the fluorescent image acquisition system 1 according to the first embodiment will be described. In the present generation example, samples S11 and S21 that are red fluorescent tapes, samples S12 and S22 that are orange fluorescent tapes, samples S13 and S23 that are green fluorescent tapes, and samples S14 and S24 that are blue fluorescent tapes were prepared, and these fluorescent tapes were arranged in a cross shape on a slide. Part (a) of FIG. 16 is a fluorescent image acquired by imaging these fluorescent tapes with a monochrome camera. Part (b) of FIG. 16 illustrates a pixel group including blue single-color pixels among the pixel groups clustered by the clustering unit 204. As illustrated in part (b) of FIG. 16, in the present generation example, the single-color pixels are clustered with high accuracy.

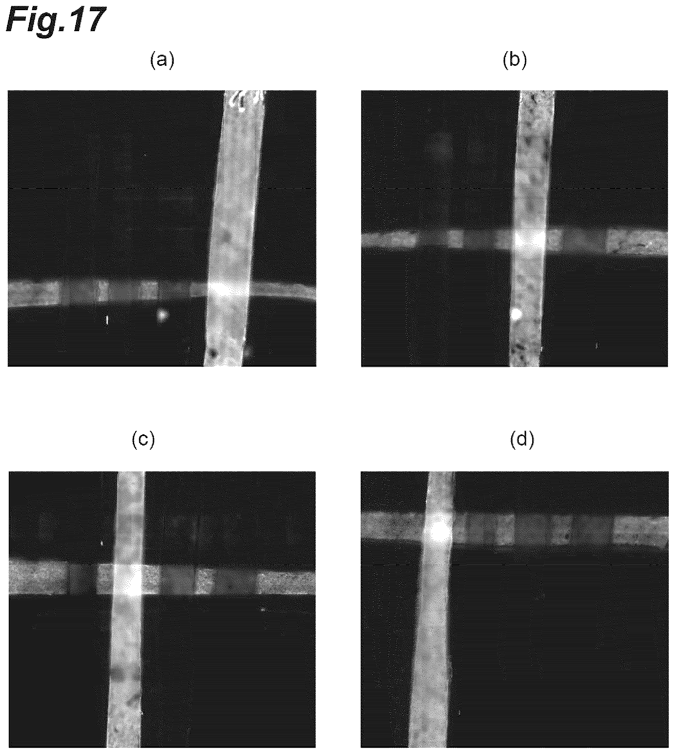

Part (a) of FIG. 17 illustrates a fluorescent image from a blue dye (samples S14 and S24) among dye images generated by the image generation unit 206, part (b) of FIG. 17 illustrates a fluorescent image from a green dye (samples S13 and S23), part (c) of FIG. 17 illustrates a fluorescent image from an orange dye (samples S12 and S22), and part (d) of FIG. 17 illustrates a fluorescent image from a red dye (samples S11 and S21). As illustrated in parts (a) to (d) of FIG. 17, in the present generation example, the fluorescent image from each dye is generated with high accuracy.

Although the embodiments of the present disclosure have been described above, the present disclosure is not limited to the above embodiments, and may be modified or applied to other objects without changing the gist described in each claim.

In the second embodiment, the first camera may be provided with a filter that can arbitrarily switch the transmission wavelength range or the reflection wavelength range on the solid-state imaging element. Examples of such a filter include a variable band pass filter having a function of a variable filter and a band pass filter, a liquid crystal tunable filter, and an AOTF (Acousto-Optic Tunable Filter). Alternatively, the first camera may separate the fluorescences for different wavelength characteristics by a spectroscope such as a prism.

When generating the matrix data Y before being clustered, the image processing device 4 according to each embodiment may generate the matrix data Y as data in which N pixels configuring an image are arranged in a row direction according to a prescribed rule, or may generate the matrix data Y as data in which the pixels are arranged in the row direction according to a random rule. However, the data of the fluorescent image of the C rows configuring one piece of matrix data Y is set as data in which the N pixels are arranged according to the same rule. Even when the matrix data Y generated by random arrangement is used, the same matrix data Y' can be regenerated by clustering.

Furthermore, when generating the matrix data Y before being clustered, the image processing device 4 according to each embodiment may generate the matrix data Y by excluding background pixels (pixels having no dye) included in the fluorescent image.

As a method of clustering the pixel groups in the image processing device 4, a method using machine learning such as a K-means method, a method using deep learning, or the like may be adopted.

The image acquisition device according to each embodiment may acquire, in addition to the first fluorescent image and the second fluorescent image, a third fluorescent image,..., and a Q-th (Q is an integer of 3 or more) fluorescent image in a third optical state,..., and a Q-th optical state in which fluorescence is measured at wavelength characteristics different from those in the first optical state and the second optical state. In the third to Q-th optical states, fluorescence is measured at wavelength characteristics different from each other. In this case, an intensity ratio and an index of variation for each excitation light may be calculated from a combination of two fluorescent images among the first to the Q-th fluorescent images, and an average of the indexes of variation in all combinations may be calculated to discriminate whether the pixel is a single-color pixel.

Furthermore, in the first, third, and fourth embodiments, it is preferable that the acquisition step includes: a first acquisition step of, with respect to each of the plurality of fluorescences, imaging the fluorescence in the first optical state using the first optical filter having transmittance different in each reflection wavelength range or each transmission wavelength range of the fluorescence filter unit to acquire a first fluorescent image, and a second acquisition step of, with respect to each of the plurality of fluorescences, imaging the fluorescence in the second optical state to acquire a second fluorescent image. Furthermore, in the first, third, and fourth embodiments, it is preferable that the image acquisition device images, with respect to each of the plurality of fluorescences, the fluorescence in the first optical state using the first optical filter having transmittance different in each reflection wavelength range or each transmission wavelength range of the fluorescence filter unit to acquire the first fluorescent image, and images, with respect to each of the plurality of fluorescences, the fluorescence in the second optical state to acquire the second fluorescent image. In this case, the accuracy of discrimination of the single-color pixel can be improved. Furthermore, by using the first optical filter, transmission characteristics or reflection characteristics of the plurality of fluorescences can be changed among the plurality of wavelength ranges, and single-color pixels of a plurality of colors can be further discriminated. In addition, the first optical state can be easily acquired by using the first optical filter, and the first fluorescent image can be easily acquired.

In the first, third, and fourth embodiments, it is preferable that the first optical filter is a first inclined filter of which transmittance monotonously changes over each reflection wavelength range, or of which transmittance monotonously changes over each transmission wavelength range. In this case, by using the first inclined filter, the transmittance over each reflection wavelength range or the transmittance over each transmission wavelength range can be monotonously changed, and single-color pixels of a plurality of colors can be discriminated more accurately. Furthermore, the first optical state can be easily acquired by using the first inclined filter, and the first fluorescent image can be easily acquired.

Further, in the fourth embodiment, in the second acquisition step, it is preferable to image the fluorescence in the second optical state using the second inclined filter exhibiting a change in transmittance different from that of the first inclined filter. In addition, in the fourth embodiment, it is preferable that the image acquisition device images the fluorescence in the second optical state using the second inclined filter that exhibits a change in transmittance different from that of the first inclined filter. Also in this case, by using the second inclined filter, the transmittance can be monotonously changed over each reflection wavelength range or over each transmission wavelength range, and single-color images of a plurality of colors can be discriminated more accurately. Furthermore, the second optical state can be easily acquired by using the second inclined filter, and the second fluorescent image can be easily acquired.

In the fourth embodiment, in the second acquisition step, it is preferable that the fluorescence is imaged in the second optical state using the second optical filter having transmittance different from that of the first optical filter. Further, in the fourth embodiment, it is preferable that the image acquisition device images the fluorescence in the second optical state using the second optical filter having transmittance different from that of the first optical filter. In this case, the second optical state can be easily acquired by using the second optical filter, and the second fluorescent image can be easily acquired.

Furthermore, in the first embodiment, in the second acquisition step, it is preferable to image the fluorescence in the second optical state in which the first optical filter is removed. Further, in the first embodiment, it is preferable that the image acquisition device images the fluorescence in the second optical state in which the first optical filter is removed. In this case, since the second optical state can be acquired by removing the first optical filter, the second optical state can be acquired more easily. Therefore, the second fluorescent image can be acquired more easily.

Furthermore, in the second embodiment, in the acquisition step, it is preferable to image each of the plurality of fluorescences to acquire the first fluorescent image and the second fluorescent image. Further, in the second embodiment, it is preferable that the image acquisition device images each of the plurality of fluorescences to acquire the first fluorescent image and the second fluorescent image. In this case, both the first fluorescent image and the second fluorescent image can be acquired by imaging each of the plurality of fluorescences once. Therefore, the first fluorescent image and the second fluorescent image can be efficiently acquired.

Furthermore, in the second embodiment, in the acquisition step, it is preferable to image each of the plurality of fluorescences using a color camera. Furthermore, in the second embodiment, it is preferable that the image acquisition device images each of the plurality of fluorescences using a color camera. For example, a plurality of images separated for each of RGB components can be acquired by imaging each of the plurality of fluorescences once using the color camera. The first fluorescent image and the second fluorescent image can be acquired from the plurality of images.

Furthermore, in the second embodiment, in the acquisition step, it is preferable to image each of the plurality of fluorescences using a hyperspectral camera. Further, in the second embodiment, it is preferable that the image acquisition device images each of the plurality of fluorescences using a hyperspectral camera. By imaging each of the plurality of fluorescences once using the hyperspectral camera, a plurality of images separated for different wavelength characteristics can be acquired. The first fluorescent image and the second fluorescent image can be acquired from the plurality of images.

Further, in the first to fourth embodiments, it is also preferable to further include a clustering step of clustering, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels in the discrimination step into L (L is an integer of 2 or more and N-1 or less) pixel groups, and generating L cluster matrices in which the C fluorescent images are arranged for each of the clustered pixel groups; a calculation step of calculating statistical values of intensity values of the pixel groups constituting the C fluorescent images for each of the L cluster matrices; and an image generation step of performing unmixing on the C fluorescent images by using the statistical values of the C fluorescent images for each of the L cluster matrices, and generating K (K is an integer of 2 or more and C or less) fluorescent images indicating a distribution for each of K dyes. Further, in the first to fourth embodiments, it is also preferable that the image processing device clusters, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels into L (L is an integer of 2 or more and N-1 or less) pixel groups, and generates L cluster matrices in which the C fluorescent images are arranged for each of the clustered pixel groups, calculates statistical values of intensity values of the pixel groups constituting the C fluorescent images for each of the L cluster matrices, performs unmixing on the C fluorescent images by using the statistical values of the C fluorescent images for each of the L cluster matrices, and generates K (K is an integer of 2 or more and C or less) fluorescent images indicating a distribution for each of K dyes. In this case, a plurality of pixels discriminated to be single-color pixels are clustered into L pixel groups, and L cluster matrices in which C fluorescent images acquired by irradiating the sample with each of excitation lights of the C wavelength distributions are arranged for each of the clustered pixel groups are generated. In addition, the statistical values of the intensity values of the pixel groups configuring the C fluorescent images are calculated for each of the L cluster matrices, and the C fluorescent images are unmixed by using the statistical values of the respective C fluorescent images to generate K fluorescent images. This makes it possible to obtain a separated image for each dye with high accuracy.

A fluorescent image acquisition method of the embodiment is [1] "a fluorescent image acquisition method including: an irradiation step of irradiating a sample with each of excitation lights of a plurality of wavelength distributions; an acquisition step of acquiring, with respect to each of a plurality of fluorescences corresponding to each of the plurality of excitation lights, a first fluorescent image in a first optical state and a second fluorescent image in a second optical state in which fluorescence is measured at a wavelength characteristic different from that in the first optical state through a fluorescence filter unit having a plurality of reflection wavelength ranges and a plurality of transmission wavelength ranges; a calculation step of calculating, for the first fluorescent image and the second fluorescent image, an intensity ratio that is a ratio between an intensity value of a pixel of the first fluorescent image and an intensity value of a pixel of the second fluorescent image corresponding to the pixel, and calculating the intensity ratio for each of the plurality of excitation lights; and a discrimination step of discriminating whether the pixel is a single-color pixel based on the intensity ratio for each of the plurality of excitation lights".

The fluorescent image acquisition method of the embodiment may be [2] "the fluorescent image acquisition method according to [1], in which the acquisition step includes a first acquisition step of imaging, with respect to each of the plurality of fluorescences, fluorescence in the first optical state using a first optical filter having transmittance different in each reflection wavelength range or each transmission wavelength range of the fluorescence filter unit to acquire the first fluorescent image, and a second acquisition step of imaging, with respect to each of the plurality of fluorescences, fluorescence in the second optical state to acquire the second fluorescent image".

The fluorescent image acquisition method of the embodiment may be [3] "the fluorescent image acquisition method according to [2], in which the first optical filter is a first inclined filter of which transmittance monotonously changes over each reflection wavelength range, or of which transmittance monotonously changes over each transmission wavelength range".

The fluorescent image acquisition method of the embodiment may be [4] "the fluorescent image acquisition method according to [3], in which in the second acquisition step, fluorescence is imaged in the second optical state using a second inclined filter exhibiting a change in transmittance different from that of the first inclined filter".

The fluorescent image acquisition method of the embodiment may be [5] "the fluorescent image acquisition method according to [2] or [3], in which in the second acquisition step, fluorescence is imaged in the second optical state using a second optical filter having transmittance different from that of the first optical filter".

The fluorescent image acquisition method of the embodiment may be [6] "the fluorescent image acquisition method according to [2] or [3], in which in the second acquisition step, fluorescence is imaged in the second optical state in which the first optical filter is removed".

The fluorescent image acquisition method of the embodiment may be [7] "the fluorescent image acquisition method according to [1], in which in the acquisition step, each of the plurality of fluorescences is imaged to acquire the first fluorescent image and the second fluorescent image".

The fluorescent image acquisition method of the embodiment may be [8] "the fluorescent image acquisition method according to [7], in which in the acquisition step, each of the plurality of fluorescences is imaged using a color camera".

The fluorescent image acquisition method of the embodiment may be [9] "the fluorescent image acquisition method according to [7], in which in the acquisition step, each of the plurality of fluorescences is imaged using a hyperspectral camera".

The fluorescent image acquisition method of the embodiment may be [10] "the fluorescent image acquisition method according to any one of [2] to [9], further including a clustering step of clustering, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels in the discrimination step into L (L is an integer of 2 or more and N-1 or less) pixel groups, and generating L cluster matrices in which the C fluorescent images are arranged for each of the clustered pixel groups; a calculation step of calculating statistical values of intensity values of the pixel groups constituting the C fluorescent images for each of the L cluster matrices; and an image generation step of performing unmixing on the C fluorescent images by using the statistical values of the C fluorescent images for each of the L cluster matrices, and generating K (K is an integer of 2 or more and C or less) fluorescent images indicating a distribution for each of K dyes".

A fluorescent image acquisition device of the embodiment is [11] "a fluorescent image acquisition device including: an irradiation device which irradiates a sample with each of excitation lights of a plurality of wavelength distributions; an image acquisition device which acquires, with respect to each of a plurality of fluorescences corresponding to each of the plurality of excitation lights, a first fluorescent image in a first optical state and a second fluorescent image in a second optical state in which fluorescence is measured at a wavelength characteristic different from that in the first optical state through a fluorescence filter unit having a plurality of reflection wavelength ranges and a plurality of transmission wavelength ranges; and an image processing device which processes a plurality of the first fluorescent images and a plurality of the second fluorescent images, in which the image processing device calculates, for the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights, and discriminates whether the pixel is a single-color pixel based on the intensity ratio for each of the plurality of excitation lights".

The fluorescent image acquisition device of the embodiment may be [12] "the fluorescent image acquisition device according to [11], in which the image acquisition device images, with respect to each of the plurality of fluorescences, fluorescence in the first optical state using a first optical filter having transmittance different in each reflection wavelength range or each transmission wavelength range of the fluorescence filter unit to acquire the first fluorescent image, and images, with respect to each of the plurality of fluorescences, fluorescence in the second optical state to acquire the second fluorescent image".

The fluorescent image acquisition device of the embodiment may be [13] "the fluorescent image acquisition device according to [12], in which the first optical filter is a first inclined filter of which transmittance monotonously changes over each reflection wavelength range, or of which transmittance monotonously changes over each transmission wavelength range".

The fluorescent image acquisition device of the embodiment may be [14] "the fluorescent image acquisition device according to [13], in which the image acquisition device images fluorescence in the second optical state using a second inclined filter exhibiting a change in transmittance different from that of the first inclined filter".

The fluorescent image acquisition device of the embodiment may be [15] "the fluorescent image acquisition device according to [12] or [13], in which the image acquisition device images fluorescence in the second optical state using a second optical filter having transmittance different from that of the first optical filter".

The fluorescent image acquisition device of the embodiment may be [16] "the fluorescent image acquisition device according to [12] or [13], in which the image acquisition device images fluorescence in the second optical state in which the first optical filter is removed".

The fluorescent image acquisition device of the embodiment may be [17] "the fluorescent image acquisition device according to [11], in which the image acquisition device images each of the plurality of fluorescences to acquire the first fluorescent image and the second fluorescent image".

The fluorescent image acquisition device of the embodiment may be [18] "the fluorescent image acquisition device according to [17], in which the image acquisition device images each of the plurality of fluorescences using a color camera".

The fluorescent image acquisition device of the embodiment may be [19] "the fluorescent image acquisition device according to [17], in which the image acquisition device images each of the plurality of fluorescences using a hyperspectral camera".

The fluorescent image acquisition device of the embodiment may be [20] "the fluorescent image acquisition device according to any one of [12] to [19], in which the image processing device clusters, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels into L (L is an integer of 2 or more and N-1 or less) pixel groups, generates L cluster matrices in which the C fluorescent images are arranged for each of the clustered pixel groups, calculates statistical values of intensity values of the pixel groups constituting the C fluorescent images for each of the L cluster matrices, performs unmixing on the C fluorescent images by using the statistical values of the C fluorescent images for each of the L cluster matrices, and generates K (K is an integer of 2 or more and C or less) fluorescent images indicating a distribution for each of K dyes".

A fluorescent image acquisition program of the embodiment is "a fluorescent image acquisition program for discriminating whether a pixel is a single-color pixel, by irradiating a sample with each of excitation lights of a plurality of wavelength distributions, with respect to each of a plurality of fluorescences corresponding to each of the plurality of excitation lights, based on a first fluorescent image in a first optical state and a second fluorescent image in a second optical state in which fluorescence is measured at a wavelength characteristic different from that in the first optical state, acquired through a fluorescence filter unit having a plurality of reflection wavelength ranges and a plurality of transmission wavelength ranges, the fluorescent image acquisition program for causing a computer to function as: an intensity ratio calculation unit which calculates, with respect to the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights; and a single-color pixel discrimination unit which discriminates whether the pixel is a single-color pixel based on the intensity ratio for each of the plurality of excitation lights".

## Reference Signs List

| | |
|---|---|
| 1, 1A, 1B, 1C | Fluorescent image acquisition system |
| 2 | Irradiation device |
| 2a | Excitation light source |
| 2b | Excitation light filter unit |
| 3, 3A, 3B, 3C | Image acquisition device |
| 3a | Fluorescence filter unit |
| 4 | Image processing device |
| 11 | Dichroic mirror |
| 13 | First optical filter (first inclined filter) |
| 15, 15A | First camera |
| 17 | Second camera |
| 19 | Second optical filter (second inclined filter) |
| 201 | Image acquisition unit |
| 202 | Intensity ratio calculation unit |
| 203 | Single-color pixel discrimination unit |
| 204 | Clustering unit |
| 205 | Statistical value calculation unit |
| 206 | Image generation unit |
| $C_1$ to $C_3$ | Dye |
| $PGr_1$ to $PGr_3$ | Pixel group |
| S, S11, S12, S13, S14, S21, S22, S23, S24 | Sample |

## Claims

1. A fluorescent image acquisition method comprising:

   an irradiation step of irradiating a sample with each of excitation lights of a plurality of wavelength distributions;
   an acquisition step of acquiring, with respect to each of a plurality of fluorescences corresponding to each of the plurality of excitation lights, a first fluorescent image in a first optical state and a second fluorescent image in a second optical state in which the fluorescence is measured at a wavelength characteristic different from that in the first optical state through a fluorescence filter unit having a plurality of reflection wavelength ranges and a plurality of transmission wavelength ranges;
   a calculation step of calculating, for the first fluorescent image and the second fluorescent image, an intensity ratio that is a ratio between an intensity value of a pixel of the first fluorescent image and an intensity value of a pixel of the second fluorescent image corresponding to the pixel, and calculating the intensity ratio for each of the plurality of excitation lights; and
   a discrimination step of discriminating whether the pixel is a single-color pixel based on the intensity ratio for each of the plurality of excitation lights.

2. The fluorescent image acquisition method according to claim 1, wherein

the acquisition step includes a first acquisition step of imaging, with respect to each of the plurality of fluorescences, the fluorescence in the first optical state using a first optical filter having transmittance different in each reflection wavelength range or each transmission wavelength range of the fluorescence filter unit to acquire the first fluorescent image, and
a second acquisition step of imaging, with respect to each of the plurality of fluorescences, the fluorescence in the second optical state to acquire the second fluorescent image.

3. The fluorescent image acquisition method according to claim 2, wherein
the first optical filter is a first inclined filter of which transmittance monotonously changes over the each reflection wavelength range, or of which transmittance monotonously changes over the each transmission wavelength range.

4. The fluorescent image acquisition method according to claim 3, wherein
in the second acquisition step, the fluorescence is imaged in the second optical state using a second inclined filter exhibiting a change in transmittance different from that of the first inclined filter.

5. The fluorescent image acquisition method according to claim 2 or 3, wherein
in the second acquisition step, the fluorescence is imaged in the second optical state using a second optical filter having transmittance different from that of the first optical filter.

6. The fluorescent image acquisition method according to claim 2 or 3, wherein
in the second acquisition step, the fluorescence is imaged in the second optical state in which the first optical filter is removed.

7. The fluorescent image acquisition method according to claim 1, wherein
in the acquisition step, each of the plurality of fluorescences is imaged to acquire the first fluorescent image and the second fluorescent image.

8. The fluorescent image acquisition method according to claim 7, wherein
in the acquisition step, each of the plurality of fluorescences is imaged using a color camera.

9. The fluorescent image acquisition method according to claim 7, wherein
in the acquisition step, each of the plurality of fluorescences is imaged using a hyperspectral camera.

10. The fluorescent image acquisition method according to any one of claims 2 to 9, further comprising:

a clustering step of clustering, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels in the discrimination step into L (L is an integer of 2 or more and N-1 or less) pixel groups, and generating L cluster matrices in which the C fluorescent images are arranged for each of the clustered pixel groups;
a calculation step of calculating statistical values of the intensity values of the pixel groups constituting the C fluorescent images for each of the L cluster matrices; and
an image generation step of performing unmixing on the C fluorescent images by using the statistical values of the C fluorescent images for each of the L cluster matrices, and generating K (K is an integer of 2 or more and C or less) fluorescent images indicating a distribution for each of K dyes.

11. A fluorescent image acquisition device comprising:

an irradiation device which irradiates a sample with each of excitation lights of a plurality of wavelength distributions;
an image acquisition device which acquires, with respect to each of a plurality of fluorescences corresponding to each of the plurality of excitation lights, a first fluorescent image in a first optical state and a second fluorescent image in a second optical state in which the fluorescence is measured at a wavelength characteristic different from that in the first optical state through a fluorescence filter unit having a plurality of reflection wavelength ranges and a plurality of transmission wavelength ranges; and

an image processing device which processes a plurality of the first fluorescent images and a plurality of the second fluorescent images, wherein

the image processing device

calculates, for the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights, and

discriminates whether the pixel is a single-color pixel based on the intensity ratio for each of the plurality of excitation lights.

12. The fluorescent image acquisition device according to claim 11, wherein

the image acquisition device images, with respect to each of the plurality of fluorescences, the fluorescence in the first optical state using a first optical filter having transmittance different in each reflection wavelength range or each transmission wavelength range of the fluorescence filter unit to acquire the first fluorescent image, and images, with respect to each of the plurality of fluorescences, the fluorescence in the second optical state to acquire the second fluorescent image.

13. The fluorescent image acquisition device according to claim 12, wherein
the first optical filter is a first inclined filter of which transmittance monotonously changes over the each reflection wavelength range, or of which transmittance monotonously changes over the each transmission wavelength range.

14. The fluorescent image acquisition device according to claim 13, wherein
the image acquisition device images the fluorescence in the second optical state using a second inclined filter exhibiting a change in transmittance different from that of the first inclined filter.

15. The fluorescent image acquisition device according to claim 12 or 13, wherein
the image acquisition device images the fluorescence in the second optical state using a second optical filter having transmittance different from that of the first optical filter.

16. The fluorescent image acquisition device according to claim 12 or 13, wherein
the image acquisition device images the fluorescence in the second optical state in which the first optical filter is removed.

17. The fluorescent image acquisition device according to claim 11, wherein
the image acquisition device images each of the plurality of fluorescences to acquire the first fluorescent image and the second fluorescent image.

18. The fluorescent image acquisition device according to claim 17, wherein
the image acquisition device images each of the plurality of fluorescences using a color camera.

19. The fluorescent image acquisition device according to claim 17, wherein
the image acquisition device images each of the plurality of fluorescences using a hyperspectral camera.

20. The fluorescent image acquisition device according to any one of claims 12 to 19, wherein

the image processing device

clusters, for C (C is an integer of 2 or more) fluorescent images acquired by irradiating a sample with each of excitation lights of C wavelength distributions, the C fluorescent images each including N (N is an integer of 2 or more) pixels, a plurality of pixels discriminated to be single-color pixels into L (L is an integer of 2 or more and N-1 or less) pixel groups, and generates L cluster matrices in which the C fluorescent images are arranged for each of the clustered pixel groups,

calculates statistical values of intensity values of the pixel groups constituting the C fluorescent images for each of the L cluster matrices, and

performs unmixing on the C fluorescent images by using the statistical values of the C fluorescent images for each of the L cluster matrices, and generates K (K is an integer of 2 or more and C or less) fluorescent images indicating a distribution for each of K dyes.

21. A fluorescent image acquisition program for discriminating whether a pixel is a single-color pixel, by irradiating a sample with each of excitation lights of a plurality of wavelength distributions, with respect to each of a plurality of fluorescences corresponding to each of the plurality of excitation lights, based on a first fluorescent image in a first optical state and a second fluorescent image in a second optical state in which the fluorescence is measured at a wavelength characteristic different from that in the first optical state, acquired through a fluorescence filter unit having a plurality of reflection wavelength ranges and a plurality of transmission wavelength ranges, the fluorescent image acquisition program for causing a computer to function as:

an intensity ratio calculation unit which calculates, with respect to the first fluorescent image and the second fluorescent image, an intensity ratio that is a ratio between an intensity value of a pixel of the first fluorescent image and an intensity value of a pixel of the second fluorescent image corresponding to the pixel, and calculates the intensity ratio for each of the plurality of excitation lights; and

a single-color pixel discrimination unit which discriminates whether the pixel is a single-color pixel based on the intensity ratio for each of the plurality of excitation lights.

*Fig.1*

## Fig.2

*Fig.3*

4

| | |
|---|---|
| **101** CPU | **104** COMMUNICATION MODULE |
| **102** RAM | **106** INPUT/OUTPUT MODULE |
| **103** ROM | |

# *Fig.4*

4

IMAGE ACQUISITION UNIT — 201

↓

INTENSITY RATIO
CALCULATION UNIT — 202

↓

SINGLE-COLOR PIXEL
DISCRIMINATION UNIT — 203

↓

CLUSTERING UNIT — 204

↓

STATISTICAL VALUE
CALCULATION UNIT — 205

↓

206

IMAGE GENERATION UNIT

IMAGE PROCESSING DEVICE

## Fig.5

(a)

(b)

## Fig.6

(a)

(b)

## Fig.7

*Fig.8*

*Fig.9*

EP 4 653 849 A1

# Fig.10

```
                    ┌─────────────┐
                    │    START    │
                    └─────────────┘
                           │
┌──────────────────────────────────────────────────────┐
│         IRRADIATE SAMPLE S WITH PLURALITY              │ ~S1
│              OF EXCITATION LIGHTS                      │
└──────────────────────────────────────────────────────┘
                           │
┌──────────────────────────────────────────────────────┐
│          ACQUIRE FIRST FLUORESCENT IMAGE AND          │ ~S2
│            SECOND FLUORESCENT IMAGE FOR               │
│          EACH OF PLURALITY OF FLUORESCENCES           │
└──────────────────────────────────────────────────────┘
                           │
┌──────────────────────────────────────────────────────┐
│              CALCULATE INTENSITY RATIO FOR            │ ~S3
│ FIRST FLUORESCENT IMAGE AND SECOND FLUORESCENT IMAGE  │
│            AND CALCULATE INTENSITY RATIO FOR          │
│          EACH OF PLURALITY OF EXCITATION LIGHTS       │
└──────────────────────────────────────────────────────┘
                           │
┌──────────────────────────────────────────────────────┐
│             DISCRIMINATE WHETHER PIXEL IS             │ ~S4
│    SINGLE-COLOR PIXEL BASED ON INTENSITY RATIO        │
│      FOR EACH OF PLURALITY OF EXCITATION LIGHTS       │
└──────────────────────────────────────────────────────┘
                           │
┌──────────────────────────────────────────────────────┐
│        CLUSTER PLURALITY OF PIXELS DISCRIMINATED      │ ~S5
│     TO BE SINGLE-COLOR PIXELS INTO L PIXEL GROUPS     │
└──────────────────────────────────────────────────────┘
                           │
┌──────────────────────────────────────────────────────┐
│               GENERATE MATRIX DATA Y                  │ ~S6
│           BASED ON C FLUORESCENT IMAGES               │
└──────────────────────────────────────────────────────┘
                           │
┌──────────────────────────────────────────────────────┐
│        GENERATE MATRIX DATA Y' BY CALCULATING         │ ~S7
│        STATISTICAL VALUES OF L PIXEL GROUPS           │
└──────────────────────────────────────────────────────┘
                           │
┌──────────────────────────────────────────────────────┐
│                DERIVE MIXING MATRIX A                 │ ~S8
│               BASED ON MATRIX DATA Y'                 │
└──────────────────────────────────────────────────────┘
                           │
┌──────────────────────────────────────────────────────┐
│     UNMIX C FLUORESCENT IMAGES TO BE OBSERVED         │ ~S9
│            AND REGENERATE K DYE IMAGES                │
└──────────────────────────────────────────────────────┘
                           │
┌──────────────────────────────────────────────────────┐
│                OUTPUT K DYE IMAGES                    │ ~S10
└──────────────────────────────────────────────────────┘
                           │
                    ┌─────────────┐
                    │     END     │
                    └─────────────┘
```

*Fig.11*

1A

3A

15A

2

3a

2a

2b

11

S

# Fig.12

## Fig.13

# *Fig.14*

**Fig.15**

1C

3C

15

19

13

3a

2

2a

2b

11

S

*Fig.16*

(a)

(b)

## Fig.17

(a)

(b)

(c)

(d)

## INTERNATIONAL SEARCH REPORT

| International application No. |
|---|
| **PCT/JP2023/046787** |

### A. CLASSIFICATION OF SUBJECT MATTER

*G01N 21/64*(2006.01)i; *G06T 7/90*(2017.01)i
FI:    G01N21/64 F; G06T7/90 C

According to International Patent Classification (IPC) or to both national classification and IPC

### B. FIELDS SEARCHED

Minimum documentation searched (classification system followed by classification symbols)

G01N21/00-21/83; G01N15/00-15/1492; G06T7/00-7/90; G01N33/48-33/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2008-541179 A (OLYMPUS SOFT IMAGING SOLUTIONS GMBH) 20 November 2008 (2008-11-20) | 1-21 |
| A | WO 2005/036143 A1 (HAMAMATSU PHOTONICS KK) 21 April 2005 (2005-04-21) | 1-21 |
| A | US 2021/0208076 A1 (KOREA ADVANCED INSTITUTE OF SCIENCE AND TECHNOLOGY) 08 July 2021 (2021-07-08) | 1-21 |
| A | MACRE, Tristan D. et al. Robust blind spectral unmixing for fluorescence microscopy using unsupervised learning. PLOS ONE. 02 December 2019, 1-24 | 1-21 |
| P, A | WO 2023/026742 A1 (HAMAMATSU PHOTONICS KK) 02 March 2023 (2023-03-02) | 1-21 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/046787**

| Patent document cited in search report | | | Publication date (day/month/year) | Patent family member(s) | | | Publication date (day/month/year) |
|---|---|---|---|---|---|---|---|
| JP | 2008-541179 | A | 20 November 2008 | US | 2009/0103801 | A1 | |
| | | | | GB | 2439025 | A | |
| | | | | WO | 2006/122810 | A1 | |
| | | | | DE | 102005022880 | A1 | |
| WO | 2005/036143 | A1 | 21 April 2005 | US | 2007/0121099 | A1 | |
| | | | | EP | 1677097 | A1 | |
| US | 2021/0208076 | A1 | 08 July 2021 | KR | 10-2021-0087869 | A | |
| WO | 2023/026742 | A1 | 02 March 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BINJIE QIN et al.** Target/Background Classification Regularized Nonnegative Matrix Factorization for Fluorescence Unmixing. *IEEE TRANSACTIONS ON INSTRUMENTATION AND MEASUREMENT*, April 2016, vol. 65 (4)

- **TRISTAN D. MCRAE et al.** Robust blind spectral unmixing for fluorescence microscopy using unsupervised learning. *PLOS ONE*, 02 December 2019